(19) Europäisches Patentamt
European Patent Office
Office européen des brevets

(11) **EP 2 893 051 B1**

(12) **EUROPÄISCHE PATENTSCHRIFT**

(45) Veröffentlichungstag und Bekanntmachung des Hinweises auf die Patenterteilung:
**13.02.2019** Patentblatt **2019/07**

(21) Anmeldenummer: **13756105.6**

(22) Anmeldetag: **28.08.2013**

(51) Int Cl.:
*C23C 2/26* (2006.01)  *C22C 18/00* (2006.01)
*C23C 2/06* (2006.01)  *B32B 15/01* (2006.01)
*C23C 2/40* (2006.01)  *C22C 18/04* (2006.01)

(86) Internationale Anmeldenummer:
**PCT/EP2013/067781**

(87) Internationale Veröffentlichungsnummer:
**WO 2014/033153 (06.03.2014 Gazette 2014/10)**

(54) **VERFAHREN ZUM AUFBRINGEN EINES SCHUTZÜBERZUGS AUF EIN STAHLFLACHPRODUKT**

METHOD FOR APPLYING A PROTECTIVE COATING TO A FLAT STEEL PRODUCT

PROCÉDÉ D'APPLICATION D'UN REVÊTEMENT DE PROTECTION SUR UN PRODUIT PLAT EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2012 EP 12182842**

(43) Veröffentlichungstag der Anmeldung:
**15.07.2015** Patentblatt **2015/29**

(60) Teilanmeldung:
**18214391.7**

(73) Patentinhaber: **Voestalpine Stahl GmbH**
**4020 Linz (AT)**

(72) Erfinder:
• **RIENER, Christian K.**
**A-4040 Linz (AT)**
• **ANGELI, Gerhard**
**A-4050 Traun (AT)**
• **HOFER, Klaus**
**A-4101 Feldkirchen an der Donau (AT)**
• **FISCHER, Wilhelm**
**A-4470 Enns (AT)**

(74) Vertreter: **OK pat AG**
**Industriestrasse 47**
**6300 Zug (CH)**

(56) Entgegenhaltungen:
**EP-A1- 1 199 376**     **WO-A1-2006/002843**
**WO-A1-2008/102009**   **GB-A- 1 125 965**
**JP-A- 2002 285 311**

## Beschreibung

Die vorliegende Erfindung bezieht sich auf ein Verfahren mit dem sich Stahlflachprodukte mit einem auf Zink basierenden Schutzüberzug beschichten lassen. Die Erfindung betrifft auch Stahlflachprodukte, wie ein Stahlband oder Stahlblech, bei denen mindestens auf einer der Seiten des Stahlflachprodukts ein auf Zink basierender Schutzüberzug aufgebracht wurde. Es geht auch um ein Stahlflachprodukt mit einem entsprechenden Schutzüberzug.

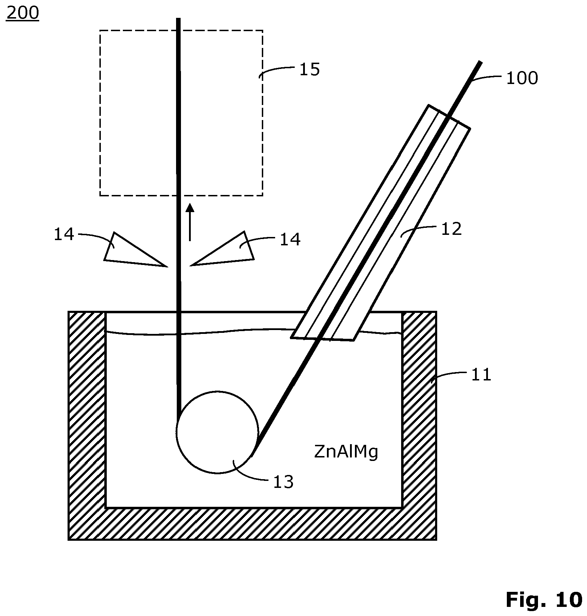

Es ist hinlänglich bekannt, dass zur Verbesserung der Korrosionsbeständigkeit von Stahlflachprodukten 100, wie Stahlbänder oder Stahlblechen, diese mit einer Zinklegierung überzogen werden. Dies geschieht in der Praxis meist indem das Stahlflachprodukt 100 aus einem Ofen kommend in ein Zinklegierungsbad 11 eingebracht wird, wie in Fig. 10 anhand einer beispielhaften Anlage 200 angedeutet. Um das Stahlflachprodukt 100 vor Oxidation zu schützen, wird es typischerweise durch einen Rüssel 12 hindurch in das Zinklegierungsbad 11 eingebracht. Im Bad 11 wird das Stahlflachprodukt 100 durch eine Rolle 13 umgelenkt und nach oben aus dem Bad 11 heraus bewegt. Beim Austauchen aus diesem Bad 11 wird der anhaftende Schmelzfilm des Stahlflachproduktes 100 mit einem Gasstrahl aus den Düsen 14 einer Abstreifdüseneinheit auf die Zielgröße abgestreift und das Stahlflachprodukt 100 wird dann in einen Kühlbereich 15 überführt. Beim Austauchen aus dem Zinklegierungsbad 11 reißt das bandförmige Stahlflachprodukt 100 eine von der Bandgeschwindigkeit abhängige Legierungsmenge mit sich. Die Legierungsmenge liegt bei einem Mehrfachen der gewünschten Legierungsauflage. Mit dem gerichteten Strahl (Stickstoff, Luft oder eine Mischung derselben bei 10 - 70 °C) aus den Düsen 14 (vorzugsweise kommen breite Flachdüsen zum Einsatz) wird soviel Legierungsschmelze abgestreift, bis die gewünschte Auflage auf dem Stahlflachprodukt 100 verbleibt. Die Schichtdicke ist unter anderem eine Funktion der Bandgeschwindigkeit, des Abblasdruckes und des Abstandes der Düsen 14 vom bandförmigen Stahlflachprodukt 100. Die Schichtdicke der Zinklegierung auf dem Stahlflachprodukt 100 kann also mit den Düsen 14 beeinflusst werden. Weiterhin spielen jedoch inhärente Eigenschaften der Legierungszusammensetzung eine Rolle. Dieses kontinuierlich arbeitende Verfahren wird im allgemeinen Schmelztauchbeschichten genannt.

Seit langem kommen sogenannte Zn-Mg-Al-Schichtsysteme zum Einsatz, die bereits bei geringen Schichtdicken eine hervorragende Korrosionsschutzwirkung entfalten. Das metallurgische Verhalten eines solchen komplexen Zn-Mg-Al-Schichtsystems im Schmelztauchbad 11 ist aus thermodynamischer Sicht nur mit Aufwand zu bestimmen und es müssen vereinfachende Annahmen getroffen werden, um das Schmelztauchbad 11 an sich und das Überziehen eines Stahlflachprodukts 100 mit einer Schutzschicht in einem solchen Schmelztauchbad 11 simulieren zu können. Das liegt unter anderem daran, dass der Vorgang des Schmelztauchbeschichtens ein dynamischer Vorgang ist, bei dem das Stahlflachprodukt 100 in einem kontinuierlichen Vorgang in das Bad 11 eingebracht und aus dem Bad 11 entnommen wird. Außerdem kann sich die Zusammensetzung des Bades 11, d.h. die lokal vorliegende Konzentrationen der einzelnen Legierungsanteile kurzzeitig lokal ändern und auch die Temperaturverteilung kann leicht variieren. Es gibt bereits zahlreiche Untersuchungen und Patentanmeldungen, die sich jeweils mit Teilaspekten von Zn-Mg-Al-Schichtsystemen im Schmelztauchbad 11 befassen. Im Folgenden sind Beispiele genannt:

- GB 1,125,965: Dieses ältere Patentdokument beschreibt ein Zn-Mg-Al-Schichtsystem bei dem der folgende große Bereich für die Legierungszusammensetzung (in Gewichtsprozent) vorgegeben wird: 1 < Mg < 4 und 0.05 < Al < 5. Konkrete Ausführungsbeispiele und die technische Lehre dieses älteren Patentdokuments beziehen sich entweder auf Zn-Mg-Al-Schichtsysteme und Schmelztauchbäder, deren Legierung konkret eine der folgenden Legierungszusammensetzungen (1. bis 5.) hat:

  1. Mg = 2 Gew.%, Al = 4 Gew.%;
  2. Mg = 2.4 Gew.%, Al = 3.2 Gew.%;
  3. Mg = 2.4 Gew.%, Al = 3.8 Gew.%;
  4. Mg = 2.49 Gew.%, Al = 4.39 Gew.%;
  5. Mg = 2.5 Gew.%, Al = 4.5 Gew.%;

  oder auf Zn-Mg-Al-Schichtsysteme und Schmelztauchbäder, deren Legierung konkret eine der folgenden Legierungszusammensetzungen (6. bis 9.) hat:

  6. Mg = 2.77 Gew.%, Al = 0 Gew.%;
  7. Mg = 2.97 Gew.%, Al = 0.12 Gew.%;
  8. Mg = 3 Gew.%, Al = 0 Gew.%;
  9. Mg = 3 Gew.%, Al = 0.2 Gew.%;

- WO2006/002843: Diese Patentanmeldung beschreibt ein Zn-Mg-Al-Schichtsystem bei dem die Legierungszusammensetzung (in Gewichtsprozent) wie folgt vorgegeben wird: 0.3 < Mg < 2.3 und 0.6 < Al < 2.3. Gemäß der Lehre dieser Patentanmeldung wird für den Magnesiumanteil ein relativ großes Fenster zwischen 0.3 Gew.% und 2.3 Gew.% aufgespannt. Um die Schweißbarkeit nicht negativ zu beeinflussen, wird laut der Lehre dieser Patentanmeldung der Aluminiumanteil auf maximal 2.3 Gew.% festgelegt.

- EP 1 621 645 A1: Diese Patentanmeldung beschreibt ein Zn-Mg-Al-Schichtsystem bei dem Aluminium und Magnesium im Verhältnis 1:1 eingesetzt werden. In diesem Dokument wird dargelegt, dass die Summe dieser Legierungselemente wegen der Schlackebildung im Bad nicht zu hoch sein sollte. Die technische Lehre von EP 1 621 645 A1 sagt unter anderem aus, dass man jenseits von 2.3 Gew.% Aluminium und 2.3 Gew.% Magnesium eine zunehmend brüchige Beschichtung erhält, bei der sich auch die Oberflächenqualität zusehends verschlechtert. Daher wird gemäß dieser Patentanmeldung ein Bereich zwischen 0.6 und 1.3 Gew.% Aluminium und 0.6 bis 1.3 Gew.% Magnesium vorgeschlagen.

- WO 2012 091385 A2: Diese Patentanmeldung beschreibt auch ein Zn-Mg-Al-Schichtsystem, wobei hier neben Zn-Mg-Al noch ein viertes Element (z.B. Silizium oder Lithium) dem Bad zugegeben wird. Laut dieser Patentanmeldung soll [Al/(Al + Mg)] in einem Bereich zwischen 0.38 und 0.48 zu liegen kommen. Diese Bereichsangabe kann umgerechnet werden in folgende Angabe: 0.61 * Mg < Al < 0.77 * Mg. Daraus ergibt sich, dass laut der technischen Lehre von WO 2012 091385 A2 stets mehr Magnesium als Aluminium in der Schmelze vorhanden sein soll.

- EP 1857566 A1: Diese Patentanmeldung beschreibt wiederum ein Zn-Mg-Al-Schichtsystem, bei dem weitere Stoffe (z.B. Pb, Si und andere) in kleinen Mengen beigefügt werden. Laut der technischen Lehre dieses Dokuments wird vor allem ein Legierungsbad bevorzugt, das zwischen 0.15 und 0.4 Gew.% Aluminium und 0.2 bis 2.0 Gew.% Magnesium enthält. Diese Patentanmeldung beschreibt, dass man durch Anwendung der beschriebenen technischen Lehre eine optimale Kombination von hoher Korrosionsbeständigkeit und optimierter Schweißbarkeit erreicht.

- EP 2119804 A1: Auch diese Patentanmeldung beschreibt ein Zn-Mg-Al-Schichtsystem, bei dem weitere Stoffe in kleinen Mengen (bis zu 0.3 Gew.%) beigefügt werden. Laut der technischen Lehre dieses Dokuments wird vor allem ein Legierungsbad bevorzugt, das zwischen 2 und 8 Gew.% Aluminium und 0 bis 5 Gew.% Magnesium enthält. Aufgabenstellung dieser Patentanmeldung ist die Reduktion der Welligkeit der erstarrten metallischen Schutzschicht.

- Die technische Publikation "Solidification Structure of the Coating Layer on Hot-Dip Zn-11 % Al-3% Mg-0.2% Si-Coated Steel Sheet" von K. Honda et al., Materials Transaction, Vol. 49, Nr. 6, 2008, Seiten 1395 - 1400, beschreibt ein Zn-Mg-Al-Schichtsystem, das aus einem Bad mit 11 Gew.% Aluminium, 3 Gew.% Magnesium und 0.2 Gew.% Silizium hergestellt wird. Es wird berichtet, dass anhand der Erstarrungsstruktur ermittelt werden konnte, dass - anders als im Gleichgewichtszustand - $MgZn_2$ statt $Mg_2Zn_{11}$ beobachtet werden konnte. Offensichtlich wurde in dem speziellen Versuchsaufbau und unter den angegebenen Bedingungen $MgZn_2$ als metastabile Struktur (Laves-Phase genannt) gebildet, $Mg_2Zn_{11}$ hingegen nicht. Weitere Angaben hierzu sind der Dissertation von E. De Bruycker zu entnehmen "Zn-Al-Mg alloy coatings: thermodynamic analysis and microstructure related properties", Dissertation, Universität Gent, 2006.

- Es gibt auch technische Ansätze, die vor allem in Produkten aus dem asiatischen Raum zur Anwendung kommen, bei denen man nicht über eine eutektische Rinne zum eutektischen Erstarrungspunkt gelangt. Diese Ansätze liegen jedoch typischerweise im übereutektischen Bereich bei über 5 Gew.% pro Legierungselement. Aus der europäischen Patentanmeldung EP1466994 A1 ist z.B. ein solcher Ansatz bekannt, der ein Metallprodukt hervorbringt, dessen Zn-Mg-Al-Schutzschicht zwischen 2 und 19 Gew.% Aluminium und zwischen 1 und 10 Gew.% Magnesium enthält.

- JP 2002 285311 A: Dieses Dokument beschreibt ein ZN-Al-MG feuerverzinktes Stahlblech, welches ein gutes Gleichgewicht von Rissbeständigkeit, Festfressbeständigkeit, Korrosionsbeständigkeit und Farbechtheit aufweist, und dessen Herstellungsmethode.

Neben dem reinen Schutz gegen Korrosion, gibt es aber immer weitergehende Anforderungen in Sachen Oberflächengüte zinkbeschichteter Stahlflachprodukte. Vor allem die Automobilindustrie, aber auch der Bausektor erwarten Produkte, die höchsten Oberflächenanforderungen genügen.

Das Aufbringen eines zinkbasierten Schutzüberzugs ist ein sehr dynamischer Vorgang, der vor allem im großindustriellen Maßstab von zahlreichen Parametern und Einflussgrößen bestimmt wird. Es wurden in den letzten Jahren verschiedene Anläufe unternommen, um die Feuerverzinkungsanlagen (wie zum Beispiel die in Fig. 10 gezeigte Anlage 200) so zu betreiben, dass bei gleichbleibend guter Korrosionsschutzwirkung der metallischen Beschichtung die Qualität der mit dem zinkbasierten Schutzüberzug versehenen Oberflächen gesteigert werden kann. Hinzu kommt, dass das ternäre Al-Mg-Zn-Phasendiagramm einer ZnAlMg-Schmelze ein sehr komplexes System mit zahlreichen intermetallischen Phasen sowohl binärer als auch ternärer Art darstellt. Das Bereitstellen homogener Oberflächen ist daher nicht trivial.

Hauptprobleme sind hierbei oftmals Oberflächenstörungen, die bei der Erstarrung der ZnAlMg-Schutzüberzüge infolge selektiver Oxidation des Schmelzfilms auftreten können.

Weitere Aspekte, die beim Bereitstellen eines geeigneten ZnAlMg-Schutzüberzugs bedacht werden sollten, sind die Wirtschaftlichkeit, der sinnvolle Einsatz wertvoller Ressourcen und vor allem der Energieaufwand, der bei der Produktion betrieben werden muss.

Es stellt sich daher die Aufgabe, ein Verfahren sowie entsprechende Stahlflachprodukte zu schaffen, die korrosionstechnisch einen besonders dauerhaften und robusten Schutzüberzug haben, wobei die Oberfläche des Schutzüberzugs besonders homogen und glatt sein soll. Es wird eine Oberflächenqualität angestrebt, die höchsten Kundenanforderungen gerecht wird.

Ausserdem soll dieses Verfahren möglichst wenig energieaufwändig, kostengünstig, einfach und reproduzierbar sein.

Zusammenfassung der Erfindung

Ein kontinuierliches (Schmelztauch-)Verfahren wird gemäß Anspruch 1 bereitgestellt, das es erlaubt ein Stahlflachprodukt mit einem metallischen (Schutz-)Überzug zu versehen, der das Stahlsubstrat des Stahlflachprodukts vor korrosivem Angriff und anderen äußeren Einflüssen schützt.

Gemäß Erfindung wird bei allen Ausführungsformen ein metallisches Bad mit einer ZnAlMg-Legierung vorgelegt, wie folgt:

- der Aluminium-Anteil (in Gewichtsprozent) ist grösser als der Magnesium-Anteil (in Gewichtsprozent);
- der Aluminium-Anteil (in Gewichtsprozent) liegt im Bereich zwischen 2 und 2.9 Gewichtsprozent;
- der Magnesium-Anteil (in Gewichtsprozent) liegt im Bereich zwischen 1.5 und 2.4 Gewichtsprozent;
- Das Verhältnis vom Magnesium-Anteil (in Gewichtsprozent) zur Summe des Aluminium-Anteils (in Gewichtsprozent) und des Magnesium-Anteils (in Gewichtsprozent) liegt im Bereich zwischen 0.34 bis 0.40;
- der Rest sind Zink und unvermeidbare Verunreinigungen.

Gemäß Erfindung liegen diese unvermeidbare Verunreinigungen bei allen Ausführungsformen in einem Bereich, der deutlich kleiner ist als 1 Gewichtsprozent (Gew.%).

Die Festschreibung des neuen ZnAlMg-Legierungskonzepts ergibt sich aus den folgenden Festlegungen und Untersuchungen. Insbesondere wurde in Zusammenhang mit konkreten Untersuchungen die Badzusammensetzung in einem Bereich von 2.0 bis 2.9 Gew.% Al und 1.5 bis 2.4 Gew.% Mg variiert. Das neue ZnAlMg-Legierungskonzept wurde aus grundlegenden thermodynamischen Betrachtungen und daraus abgeleiteten, vereinfachten Modellen ermittelt. Anhand konkreter Versuche konnte belegt werden, dass das Legierungskonzept in der Tat zu sehr guten Ergebnissen führt. Es hat sich gezeigt, dass die Schmelze und deren Erstarrung am Flachstahlprodukt ursächlich mit dem optischen Erscheinungsbild und der Qualität der erstarrten Oberfläche zusammen hängen und dass eine kontrollierte Vorgabe des Erstarrungsverhaltens hervorragende Ergebnisse hervor bringt. Entsprechende Erstarrungskurven konnten dabei als grobe Anhaltspunkte dienen, um die praktische Umsetzung besser verstehen zu können.

Da offensichtlich beim Erstarren der ZnAlMg-Legierung am Stahlflachprodukt mehrere verschiedene Phasen und Legierungen nebeneinander vorliegen und thermodynamisch miteinander wechselwirken, wurde ein praktikabler Weg gesucht, um einen anderen Erstarrungsweg zu beschreiten als bisher. Ziel ist es beim Erstarren der Schutzschicht möglichst ein sogenanntes ternäres Eutektikum der Metalle Zn, Al und Mg zu bilden. Bisher liegen vor der finalen Erstarrung dieses ternären Eutektikums im Wesentlichen zwei unterschiedliche Phasen im Bad vor. Bei diesen beiden Phasen handelt es sich um die primäre Zinkphase und um ein binäres Eutektikum.

Wichtig ist, dass das vorliegende Legierungskonzept beim Austauchen aus dem Schmelzbad und beim Abstreifen mittels Düsen mehr Freiheitsgrade (im Sinne eines größeren Produktionsfensters) für das Optimieren des Abstreifprozesses ermöglicht, was aus prozesstechnischer und wirtschaftlicher Sicht sehr vorteilhaft ist. Damit kann man neben der reinen Optimierung der Legierungszusammensetzung des Bades auch die physikalischen Parameter (vorzugsweise den Düsenlippenspalt d der Düsen und/oder den Abstand z der Düsen zum Stahlband) beim Austauchen und Abstreifen in weiten Bereichen einstellen und optimieren, um so das gewünschte Gesamtergebnis zu erzielen.

Gemäß Erfindung konnten beim Abstreifen nach dem Austauchen das Auftreten von Fehlerbildern (wie ZnAlMg-Abstreifstörung und Oberflächentopographiefehler) deutlich reduziert werden. Außerdem konnte erreicht werden, dass das Einstellen der physikalischen Parameter (Düsenlippenspalt d und/oder den Abstand z der Düsen zum Stahlband) beim Austauchen und Abstreifen in größeren Parameterfenstern möglich ist als bisher, ohne dass solche Einstellungen zu einer Erhöhung der Fehlerbilder am Stahlband führen würde.

Gemäß Erfindung konnte auch die sogenannte Weißrostbeständigkeit an der Sicke nach Salzsprühtest des Stahlflachprodukts mit erfindungsgemäßem Schutzüberzug erhöht werden, was ein großer Vorteil gegenüber anderen Legierungssystemen ist.

Gemäß Erfindung soll im Zuge der Erstarrung bis zum Erreichen des ternären Eutektikums (bei ca. 343°C) weder $MgZn_2$ noch eine aluminiumreiche Phase sondern möglichst nur Zink ausgeschieden werden.

Gemäß Erfindung wird das neue Legierungskonzept so gewählt, dass beim Erstarren hauptsächlich die primären Zinkdendriten entstehen. Die Zusammensetzung der Schmelze kann jedoch durch substrat-, behandlungsgeschwindigkeits- und abstreifdruckbedingte Variationen im Legierungsaustrag, sowie geringen Schwankungen im Legierungsgehalt der zu chargierenden Zink-Aluminium-Magnesium-Blöcke von der erfindungsgemäßen Idealzusammensetzung abdriften, wodurch - nicht beabsichtigt - kurz vor dem Erreichen des ternären Eutektikums noch eine der beiden eutektischen Rinnen (entweder die Mg-reiche Rinne oder die aluminiumreiche Rinne) getroffen werden kann. Dies führt dann neben der Zink-Primärausscheidung in geringem Ausmaß auch zur binären Ausscheidung von $MgZn_2$ und Zn und/oder aluminiumreiche Zink-Phase. D.h. es können $MgZn_2$-Bereiche und/oder Al-Bereiche bzw. Phasen - entstehen. Der Gehalt an - unbeabsichtigt - binär ausgeschiedener Mg- oder Al-reicher Phase liegt in der durcherstarrten Zn-Al-Mg-Schicht stets bei weniger als 10 Gew.%, weitaus überwiegend jedoch bei weniger als 5 Gew.%.

Die Entwicklung des neuen Legierungskonzepts geht zurück auf theoretische Betrachtungen in Gleichgewichtssituationen, diverse Simulationen und deren Umsetzung in konkreten praktischen Versuchen. Es konnte gezeigt werden, dass die Theorie, auch wenn sie meist von statischen Legierungsbädern bzw. von Legierungsbädern im Gleichgewicht ausgeht, sich näherungsweise auf die Praxis übertragen lässt. Es wurden vor allem auch Versuche im großtechnischen Produktionsmaßstab vorgenommen. Dabei konnte ermittelt werden, dass es wichtig ist die thermodynamisch bevorzugte $Mg_2Zn_{11}$-Phase auszuschließen. Wenn man diese $Mg_2Zn_{11}$-Phase ausschließt, ergibt sich ein anderer Erstarrungsweg als bisher. Dieser Erstarrungsweg wird hier vereinfachend als quasi-einphasiger Erstarrungsweg bezeichnet, da man diesen Erstarrungsweg gezielt so vorgibt, dass bis zum Erreichen des Erstarrungspunktes des ternären Eutektikums im Wesentlichen nur eine Phase ausgeschieden wird. Durch die Vorgabe einer konkreten Legierungszusammensetzung wird der Erstarrungsweg so beeinflusst, dass sich folglich ein quasi-einphasiger Erstarrungsweg ergibt, der relativ direkt den Punkt des ternären Eutektikums erreicht. Das neue Legierungskonzept geht dabei nicht den Weg in Richtung einer eutektischen Rinne und dann entlang dieser Rinne bis zum Punkt des ternären Eutektikums.

Gemäß Erfindung wird der quasi-einphasige Erstarrungsweg so vorgegeben, dass das ternäre Eutektikum der Metalle Zn, Al und Mg nahezu unmittelbar nach der primären Zink-Phase entsteht. Man zwingt den Verlauf der Erstarrung der Legierung auf dem Stahlflachprodukt durch Vorgabe des Verhältnisses vom Aluminium-Anteil (in Gewichtsprozent) zum Magnesium-Anteil (in Gewichtsprozent) in die gewünschte Richtung. Damit wird der quasi-einphasige Erstarrungsweg aufgezwungen.

Gemäß Erfindung wird dieser einphasige Pfad oder Erstarrungsweg vorzugsweise bei allen Ausführungsformen so geführt oder gesteuert, dass er hauptsächlich durch die primäre Erstarrung von Zinkdendriten (Z) gekennzeichnet ist.

Gemäß Erfindung ist das Erstarrungsverhalten der ZnAlMg-Schutzüberzüge besonders gut geeignet, um im nachfolgenden Prozess des Abstreifens nach dem Austauchen einen ZnAlMg-Schutzüberzug zu erhalten, der in Qualität und Schichtdicke den modernen Anforderungen im Automobilesektor und in anderen Gebieten entspricht. Insbesondere wurde mit der Erfindung der Energieaufwand so optimiert, dass man trotzdem ein gutes Erstarrungsverhalten erzielt.

Untersuchungen haben gezeigt, dass sich das optimierte Legierungskonzept sowohl im Mikrogefüge der erzeugten ZnAlMg-Schutzschicht, als auch in der verminderten Fehlerhäufigkeit der Oberfläche dieser ZnAlMg-Schutzschicht abbildet. Eine solche ZnAlMg-Schutzschicht weist deutlich weniger Bereiche mit dem binären Eutektikum (BE) (respektive binäre eutektische Strukturen) auf und zeigt hauptsächlich Zinkdendriten und das ternäre ZnAlMg-Eutektikum (TE) (respektive ternäre eutektische Strukturen). In der Praxis kann diese ZnAlMg-Schutzschicht eventuell mit einem geringen Rest an Al-Bereichen bzw. Phasen und/oder binären Eutektikum aus Zn und MgZn2-Phase versehen sein.

Erfindungsgemäß wird der Erstarrungsprozess am Stahlflachprodukt bei allen Ausführungsformen so vorgegeben bzw. gesteuert, dass der Feststoffanteil vor dem Erstarren des ternären Eutektikums im Bereich zwischen ca. 0.4 und 0.6 (Mol-Anteil des Feststoffs im Bad) liegt. Dieses Bereichsfenster konnte auf theoretischem Weg aus Erstarrungskurven abgeleitet und anhand von Querschliffbildern von Schutzschichten, die mit dem Verfahren der Erfindung hergestellt wurden, bestätigt werden.

Vorzugsweise wird der Erstarrungsprozess am Stahlflachprodukt bei allen Ausführungsformen so vorgegeben bzw. gesteuert, dass der Feststoffanteil vor der finalen eutektischen Erstarrung, d.h. vor dem Erreichen des eutektischen Punkts, unter 55 % liegt.

Vorzugsweise wird das neue Legierungskonzept der Erfindung auf sogenannte schmelztauchbeschichtete Stahlflachprodukte angewendet.

Die Erfindung ermöglicht es Schichthaftungsprobleme auszuschließen oder gegenüber anderen ZnAlMg-Schutzschichten deutlich zu reduzieren. Es bildet sich ein sehr stabiles und oberflächen-homogenes Gefüge als Schutzschicht.

Anders als beim Stand der Technik, werden der Aluminium-Anteil und der Magnesium-Anteil so gewählt, dass deutlich weniger Magnesium im Vergleich zum Aluminium im Schmelzbad vorhanden ist. Erfindungsgemäß ist der Aluminium-Anteil zusammen mit dem Magnesium-Anteil bei allen Ausführungsformen kleiner als 5.3 Gew.% mit maximal 2.9 Gew.% Aluminium-Anteil und maximal 2.4 Gew.% Magnesium-Anteil.

Anders als beim Stand der Technik, wurden gemäss Erfindung die Legierungsbestandteile (vor allem der Aluminium-Anteil und der Magnesium-Anteil) so gewählt, dass ein möglichst niedriger Energieverbrauch (bzw. eine optimale Energiebilanz) erreicht wird. Dabei spielt einerseits der direkte Energieverbrauch beim Schmelzen, Beschichten und Abstreifen eine Rolle. Andererseits schlägt aber vor allem auch der Energieaufwand der Einsatzstoffe deutlich zu Buche.

Höhere Aluminium- und Magnesiumanteile als jene, welche aus metallurgischen Gegebenheiten zur Erzielung von außenhautfähiger Oberflächenqualität unbedingt notwendig sind, erscheinen unter diesem (ökologischen / energetischen) Aspekt nicht sinnvoll. In dieser Beziehung bietet die Erfindung einen deutlichen Vorteil gegenüber anderen Legierungssystemen, die hohe Aluminium- und Magnesiumanteile vorsehen.

Das erfindungsgemässe Legierungskonzept stellt ein Optimum hinsichtlich

- minimal zuträglichem Legierungsgehalt in Bezug auf die Außenhaut-Oberflächenqualität,
- Vermeidung von Sekundärausscheidungen im Bereich der eutektischen Rinnen des Zn-reichen ternären Systems Zn-Al-Mg, insbesondere $MgZn_2$-Phasen,
- verbesserter Korrosionsbeständigkeit in etlichen Anwendungsbereichen (verglichen mit Zink- und Zink-Eisen-Beschichtungen)
- einer im Sinne des Produktzyklus ressourcenschonenden, ökologisch sinnvollen und nachhaltig vertretbaren Anwendung

dar.

Die Erfindung lässt sich sowohl auf warm- als auch auf kaltgewalzte Stähle und entsprechende Stahlflachprodukte anwenden.

Weitere vorteilhafte Ausgestaltungen der Erfindung bilden die Gegenstände der abhängigen Ansprüche.

ZEICHNUNGEN

Ausführungsbeispiele werden im Folgenden unter Bezugnahme auf die Zeichnungen näher beschrieben.

FIG. 1A    zeigt eine schematische Darstellung eines Gehaltsdreiecks eines ZnAlMg-Legierungsbads;

FIG. 1B    zeigt eine schematische Darstellung des Gehaltsdreiecks der Fig. 1A, wobei Koordinatenlinien gezeigt sind und der zinkreiche Bereich schraffiert dargestellt ist;

FIG. 1C    zeigt eine schematische Vergrösserung des zinkreichen Bereichs der Fig. 1B, wobei Koordinatenlinien gezeigt sind und der quasi einphasige Erstarrungsweg der Erfindung schematisch dargestellt ist;

FIG. 2A    zeigt eine 3-dimensionale Darstellung in der die Anteile des ternären Systems Al-Mg-Zn im zwei-dimensionalen Bereich und nach oben in den Raum hinein die Temperatur (T) aufgetragen ist. Dieser Darstellung ist der Verlauf des Zustandspunktes gemäss Erfindung (d.h. der quasi einphasige Erstarrungsweg) zu entnehmen;

FIG. 2B    zeigt eine 2-dimensionale Darstellung des zinkreichen Bereichs der Fig. 2A, wobei der quasi einphasige Erstarrungsweg der Fig. 2A in die Ebene projiziert wurde;

FIG. 3    zeigt eine schematische Darstellung eines weiteren Gehaltsdreiecks des Zn-Al-Mg Systems in nicht maßstäblicher Form;

FIG. 4    zeigt eine schematische Darstellung einer klassischen Erstarrungskurve eines Al-Mg-Zn Bades, das 2.0 Gewichtsprozent Aluminium und 2.0 Gewichtsprozent Magnesium umfasst;

FIG. 5    zeigt eine schematische Darstellung einer Erstarrungskurve eines Al-Mg-Zn Bades, das 2.0 Gewichtsprozent Aluminium und 2.0 Gewichtsprozent Magnesium umfasst, wobei hier die $Mg_2Zn_{11}$-Phase ausgeschlossen wurde;

FIG. 6    zeigt eine schematische Darstellung einer theoretisch ermittelten Erstarrungskurve eines Al-Mg-Zn Bades der Erfindung, das beispielhafte 2.5 Gewichtsprozent Aluminium und 1.6 Gewichtsprozent Magnesium umfasst, wobei auch hier die $Mg_2Zn_{11}$-Phase ausgeschlossen wurde (der eutektische Punkt ist mit E bezeichnet);

FIG. 7    zeigt eine schematische Darstellung eines beispielhaften, erfindungsgemäßen Zusammenhangs zwischen dem Aluminium-Anteil und dem Magnesium-Anteil;

FIG. 8    zeigt eine schematische Darstellung eines Querschliffs durch einen oberen Bereich eines Stahlflachprodukts und einer konventionellen ZnAlMg-Schutzschicht, wobei diese Schutzschicht aus einem Al-Mg-Zn Bad mit 2.0 Gewichtsprozent Aluminium und 2.0 Gewichtsprozent Magnesium erzeugt wurde;

FIG. 9    zeigt eine stark schematische Darstellung eines Querschliffs durch einen oberen Bereich eines Stahlflachprodukts mit einer erfindungsgemäßen ZnAlMg-Schutzschicht, wobei diese Schutzschicht aus einem Al-Mg-Zn Bad mit 2.5 Gewichtsprozent Aluminium und 1.6 Gewichtsprozent Magnesium erzeugt wurde (der Anteil des binären Eutektikums BE ist kleiner als < 10% und vorzugsweise < 5%);

FIG. 10    zeigt eine stark schematische Darstellung einer bekannten Anlage zum Feuerverzinken;

FIG. 11    zeigt eine stark schematisierte, tabellarische Darstellung der Intensität von Fehlern, die bei einem konventionellen Zn-Mg-Al-Schichtüberzug im Vergleich zum erfindungsgemässen Schichtüberzug auftreten.

Detaillierte Beschreibung

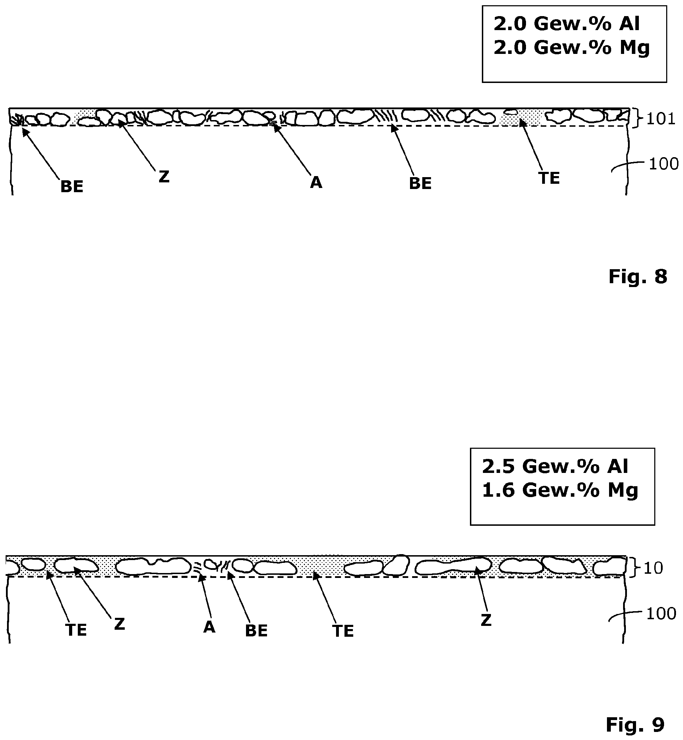

Gemäß Erfindung geht es um ein ZnAlMg-Legierungsbad 11 (siehe z.B. Fig. 10). Dieses Legierungsbad 11 und die daraus erzeugte Legierung (Schutzschicht 10 in Fig. 9) umfassen im Wesentlichen die drei Komponenten Zn, Al und Mg und eventuell unvermeidbare Verunreinigungen. Vorzugsweise liegen diese unvermeidbare Verunreinigungen bei allen Ausführungsformen der Erfindung in einem Bereich, der deutlich kleiner ist als 1 Gew.%.

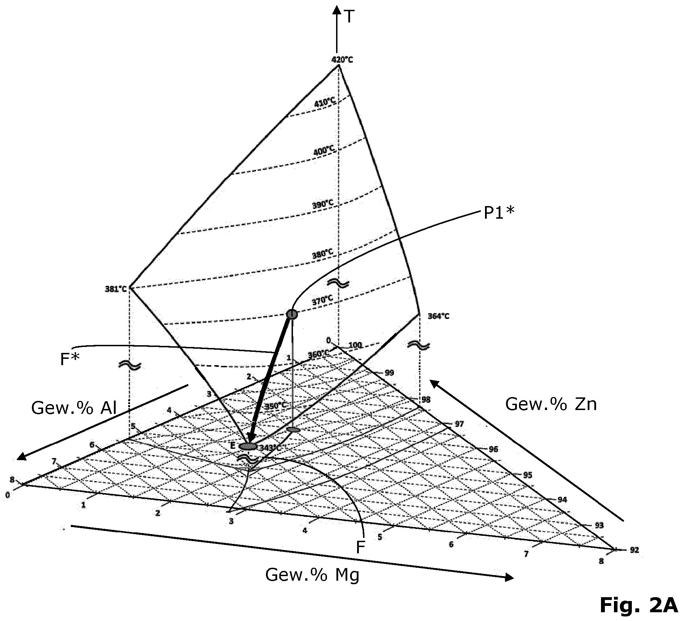

Der Zustand einer entsprechenden Legierung wird durch drei Variablen festgelegt und zwar durch die Temperatur T und durch zwei Gehaltsangaben (Konzentrationsangaben). Damit steht auch der Gehalt der dritten Komponente fest. Für solche ternäre Systeme ist eine zweidimensionale Darstellung der Phasendiagramme nicht möglich und man verwendet daher dreidimensionale Darstellungen. Die Grundfläche dieser Darstellung beschreibt die Gehalte und nach oben in den Raum hinein wird die Temperatur aufgetragen. Ein- und Mehrphasengebiete bilden in dieser Darstellung dreidimensionale Körper. Eine entsprechende beispielhafte Darstellung ist der Fig. 2A zu entnehmen, die später beschrieben wird.

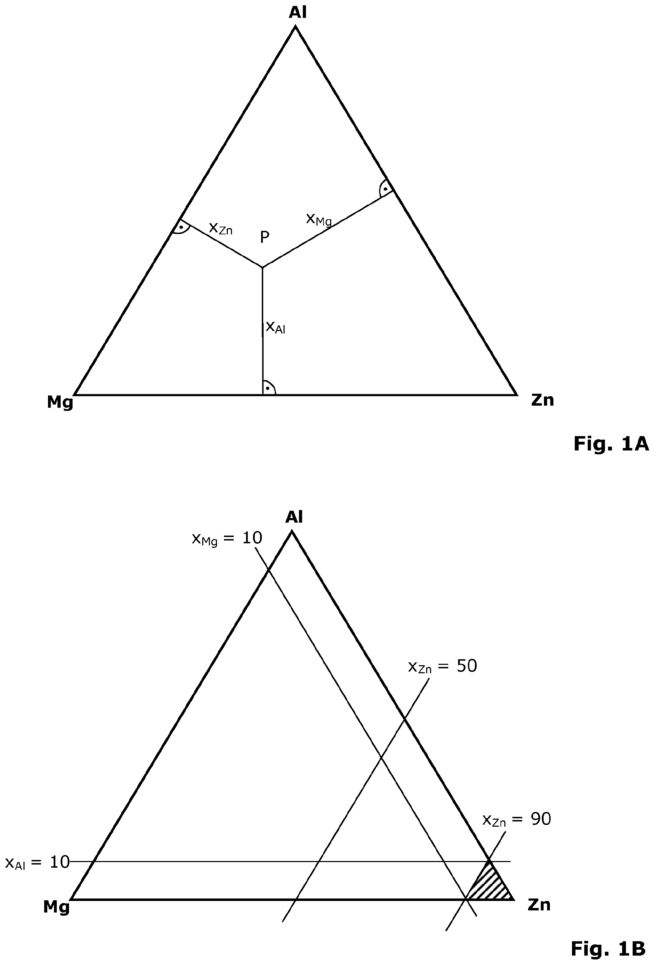

Die Grundfläche eines ternären Phasendiagramms kann als Gehaltsdreieck dargestellt werden, wie für ein ZnAlMg-Legierungsbad in Fig. 1A gezeigt. Die Gehalte der drei Komponenten Zn, Al und Mg werden durch $x_{Zn}$, $x_{Al}$, und $x_{Mg}$ dargestellt. Da nur zwei Gehalte voneinander unabhängig sind, lassen sich die drei Gehalte als ein Punkt in dem Gehaltsdreieck darstellen. Es gilt:

$$x_{Zn} + x_{Al} + x_{Mg} = 100\% \hspace{4cm} [1]$$

Die Angaben (Gehalte) in Gewichtsprozent (Gew.%) der drei Komponenten Zn, Al und Mg zusammen mit etwaigen Verunreinigungen ergeben in der Summe stets 100.

In Fig. 1A sei P eine beispielhafte Legierung. Dann entsprechen die Abstände des Punktes P von den Seiten des gleichseitigen Dreiecks den drei Gehalten $x_{Zn}$, $x_{Al}$, und $x_{Mg}$. Für jeden Punkt in einem gleichseitigen Dreieck ist nämlich die Summe der drei Abstände von den Seiten gleich der Höhe des Dreiecks. Die Höhe des Dreiecks setzt man gleich 100%. Zum einfacheren Ablesen setzt man ein Dreieckskoordinatennetz ein. Da es bei der Erfindung um ein zinkreiches Bad geht, bei dem der Zinkanteil grösser ist als 90%, d.h. $x_{Zn}$ > 90, ist die rechte untere Ecke des Gehaltsdreiecks von besonderer Bedeutung. In Fig. 1B sind folgende Linien des Dreieckskoordinatennetzes eingezeichnet: $x_{Zn}$ = 50 und $x_{Zn}$ = 90 als Parallelen zu dem Schenkel Mg-Al; $x_{Mg}$ = 10 als Parallele zu dem Schenkel Al-Zn und $x_{Al}$ = 10 als Parallele zu dem Schenkel Mg-Zn. Für Legierungen mit einem Zinkanteil, der grösser ist als 90% ist daher das schraffierte Dreieck der Fig. 1B näher zu betrachten.

Je nach Bemaßung der Achsen des Dreieckskoordinatennetzes kann man aus solchen Abbildungen entweder Angaben in Gew.% (Gewichtsprozent) oder Angaben in at.% (Atomprozent) ablesen. Der Unterschied zwischen Gew.%-Angaben und Angaben in at.% ist ca. ein Faktor 2,4 bezogen auf die Legierungselemente Aluminium und Magnesium. Im Zusammenhang mit der vorliegenden Beschreibung und den Abbildungen geht es um Gew.%, falls nicht explizit etwas anderes angegeben ist.

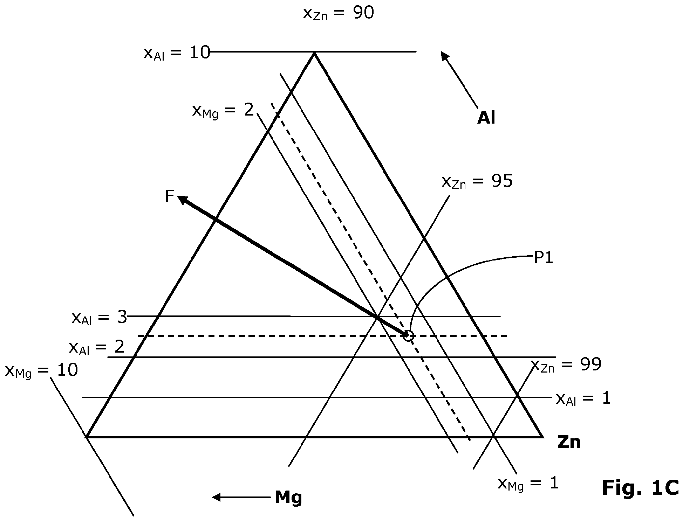

In Fig. 1C ist das schraffierte Dreieck aus Fig. 1B vergrössert und ohne Schraffur dargestellt. In Fig. 1C sind folgende Linien des Dreieckskoordinatennetzes eingezeichnet (Angaben in Gew.%): $x_{Zn}$ = 90, $x_{Zn}$ = 95 und $x_{Zn}$ = 99 als Parallelen zu dem Schenkel Mg-Al; $x_{Mg}$ = 10, $x_{Mg}$ = 2 und $x_{Mg}$ = 1 als Parallelen zu dem Schenkel Al-Zn, sowie $x_{Al}$ = 10, $x_{Al}$ = 3, $x_{Al}$ = 2 und $x_{Al}$ = 1 als Parallelen zu dem Schenkel Mg-Zn.

Gemäß Erfindung liegt das Verhältnis vom Magnesium-Anteil (in Gewichtsprozent) zur Summe des Aluminium-Anteils (in Gewichtsprozent) und des Magnesium-Anteils (in Gewichtsprozent) im Bereich zwischen 0.34 bis 0.40. Die folgende Tabelle 1 (Beispiele 3.2, 4.2 und 4.3 sind gemäß Anspruch 1) gibt einige Zahlenpaare an, die anhand von Versuchsreihen ermittelt wurden.

| Tabelle 1: | | | |
|---|---|---|---|
| Beispiel (Versuchsreihe) | Aluminium in Gew.% (x) | Magnesium in Gew.% (y) | Gleichung [2]: y/(x+y) |
| 1.1 | 2 | 0.9 | 0.31 |
| 1.2 | 2 | 1.1 | 0.355 |
| 1.3 | 2 | 1.3 | 0.394 |
| 2.1 | 2.3 | 1.4 | 0.378 |
| 2.2 | 2.3 | 1.6 | 0.41 |
| 2.3 | 2.3 | 1.8 | 0.439 |

(fortgesetzt)

| Tabelle 1: | | | |
|---|---|---|---|
| Beispiel (Versuchsreihe) | Aluminium in Gew.% (x) | Magnesium in Gew.% (y) | Gleichung [2]: y/(x+y) |
| 3.1 | 2.5 | 1.4 | 0.378 |
| 3.2 | 2.5 | 1.6 | 0.39 |
| 3.3 | 2.5 | 1.8 | 0.419 |
| 4.1 | 2.7 | 1.4 | 0.341 |
| 4.2 | 2.7 | 1.6 | 0.372 |
| 4.3 | 2.7 | 1.8 | 0.4 |

Wenn man die letzte Spalte der Tabelle 1 in aufsteigender Reihenfolge sortiert, ergibt sich der folgende Zahlenbereich von 0.31 bis 0.44 (von 0.439 aufgerundet), wie in der letzten Spalte der Tabelle 2 (Beispiele 3.2, 4.2 und 4.3 sind gemäß Anspruch 1) gezeigt ist.

| Tabelle 2: | | | |
|---|---|---|---|
| Beispiel (Versuchsreihe) | Aluminium in Gew.% (x) | Magnesium in Gew.% (y) | Gleichung [2]: y/(x+y) |
| 1.1 | 2 | 0.9 | 0.31 |
| 4.1 | 2.7 | 1.4 | 0.341 |
| 1.2 | 2 | 1.1 | 0.355 |
| 4.2 | 2.7 | 1.6 | 0.372 |
| 2.1 | 2.3 | 1.4 | 0.378 |
| 3.1 | 2.5 | 1.4 | 0.378 |
| 3.2 | 2.5 | 1.6 | 0.39 |
| 1.3 | 2 | 1.3 | 0.394 |
| 4.3 | 2.7 | 1.8 | 0.4 |
| 2.2 | 2.3 | 1.6 | 0.41 |
| 3.3 | 2.5 | 1.8 | 0.419 |
| 2.3 | 2.3 | 1.8 | 0.439 |

Weiter kann fest gelegt werden, dass sich der Magnesium-Anteil (in Gewichtsprozent) bei allen Ausführungsformen proportional zu dem Aluminium-Anteil (in Gewichtsprozent) verhält, wie den mittleren beiden Spalten der Tabelle 1 entnommen werden kann. Tabelle 3 (Beispiele 3.2, 4.2 und 4.3 sind gemäß Anspruch 1) gibt dieselben Versuchsreihen wieder, wobei die Werte der letzten Spalte der Tabelle 3 in aufsteigender Reihenfolge sortiert sind.

| Tabelle 3: | | | |
|---|---|---|---|
| Beispiel (Versuchsreihe) | Aluminium in Gew.% (x) | Magnesium in Gew.% (y) | Gleichung [4]: x-y |
| 2.3 | 2.3 | 1.8 | 0.5 |
| 1.3 | 2 | 1.3 | 0.7 |
| 2.2 | 2.3 | 1.6 | 0.7 |
| 3.3 | 2.5 | 1.8 | 0.7 |
| 1.2 | 2 | 1.1 | 0.9 |
| 2.1 | 2.3 | 1.4 | 0.9 |
| 3.2 | 2.5 | 1.6 | 0.9 |

(fortgesetzt)

| Tabelle 3: | | | |
|---|---|---|---|
| Beispiel (Versuchsreihe) | Aluminium in Gew.% (x) | Magnesium in Gew.% (y) | Gleichung [4]: x-y |
| 4.3 | 2.7 | 1.8 | 0.9 |
| 1.1 | 2 | 0.9 | 1.1 |
| 3.1 | 2.5 | 1.4 | 1.1 |
| 4.2 | 2.7 | 1.6 | 1.1 |
| 4.1 | 2.7 | 1.4 | 1.3 |

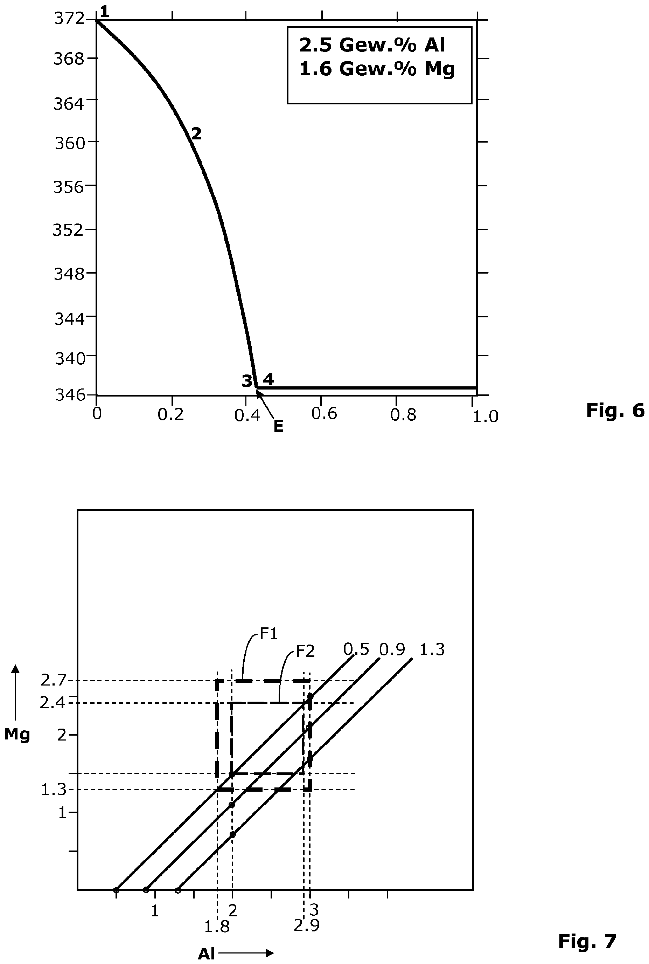

Die Legierungszusammensetzung der ZnAlMg-Schmelze im Zinkbad wird gemäß Erfindung aufgrund von Analysen des Verlaufes von theoretisch errechneten Abkühlkurven eingestellt. Es ist zu berücksichtigen, dass die Abkühlung (Kühlrate), die der Simulation hinterlegt ist, eine andere ist als die wirkliche Kühlrate beim Verzinken. Der Trend ist aber bei theoretisch ermittelten Abkühlkurven mit Ausschluss von $Mg_2Zn_{11}$ und beim konkreten Verzinken derselbe. Eine Abkühlkurve nach Fig. 6 dient daher quasi als Anhaltspunkt oder Leitlinie.

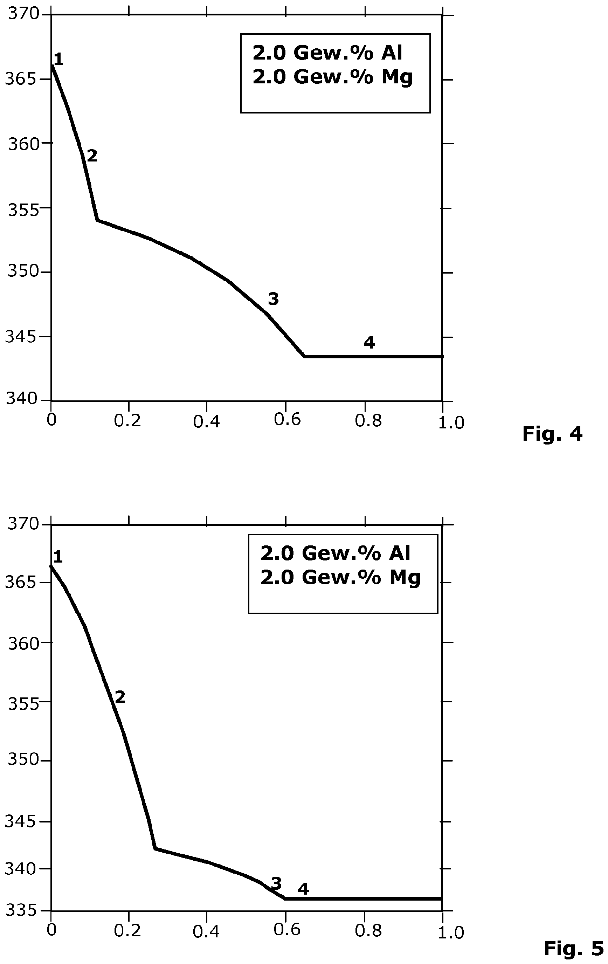

In Fig. 4 ist eine erste Abkühlkurve gezeigt, die eine konventionelle Zusammensetzung eines ZnAlMg-Bades mit 2.0 Gew.% Al und 2.0 Gew.% Mg widerspiegelt. In Fig. 5 ist eine Abkühlkurve gezeigt, die eine konventionelle Zusammensetzung eines ZnAlMg-Bades mit 2.0 Gew.% Al und 2.0 Gew.% Mg widerspiegelt, wobei nun bei der Berechnung der Abkühlkurve die thermodynamisch bevorzugte $Mg_2Zn_{11}$-Phase bewusst ausgeschlossen wurde.

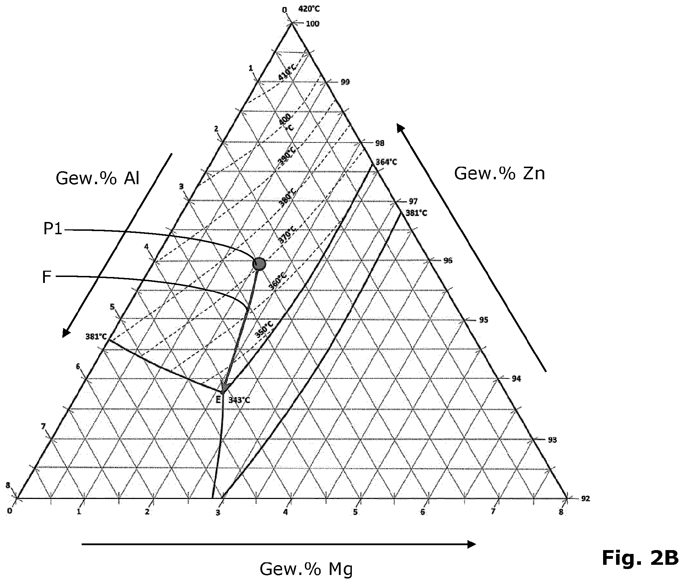

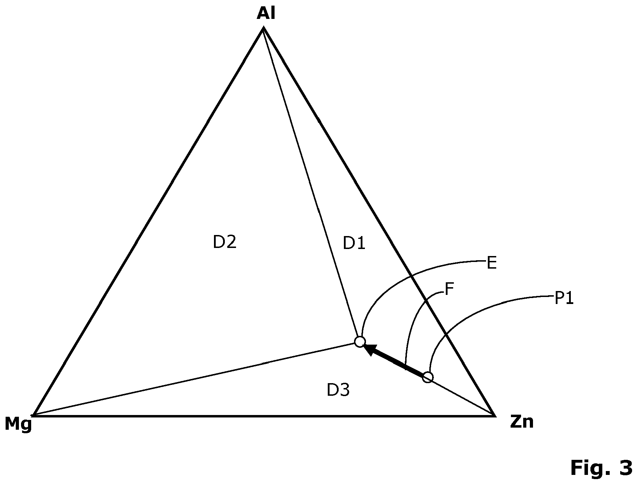

In Fig. 6 hingegen ist eine theoretische Abkühlkurve gezeigt, die eine erfindungsgemäße Zusammensetzung eines ZnAlMg-Bades mit 2.5 Gew.% Al und 1.6 Gew.% Mg widerspiegelt, wobei auch hier bei der Berechnung die thermodynamisch bevorzugte $Mg_2Zn_{11}$-Phase ausgeschlossen wurde. Anhand von Fig. 6 kann man erkennen, dass durch das Ausschließen der $Mg_2Zn_{11}$-Phase und durch das Festlegen eines speziellen Verhältnisses zwischen dem Aluminium-Anteil (in Gewichtsprozent) und dem Magnesium-Anteil (in Gewichtsprozent) ein nahezu direkter Übergang vom Erstarren der Zinkdendriten (Kurvenabschnitt 2 in diesen Figuren) zum Erstarren des ternären Eutektikums TE (Kurvenabschnitt 4 in diesen Figuren) erfolgt. Der Punkt des ternären Eutektikums ist (wie auch in den Figuren 2 und 3) mit "E" bezeichnet. Weiterhin ist aus der theoretischen Abkühlkurve der Fig. 6 festzustellen, dass der Übergang zum Erstarren des ternären Eutektikums TE (Kurvenabschnitt 4) im Bereich zwischen 0.4 und 0.6 liegt. Vorzugsweise liegt bei allen Ausführungsformen der Erfindung der Feststoffanteil im Bad unterhalb von 50%, d.h. im Bereich < 0.5.

Die Abkühlkurven in den Figuren 4, 5 und 6 zeigen die Erstarrung einer definierten Schmelze (Zn-, Al- und Mg-Gehalte), indem die Art der dabei entstehenden Phase als Feststoffanteil (X-Achse; Mol-Anteil des Feststoffs, der sich im Bad bildet) gegen die Temperatur (Y-Achse; in Grad Celsius) aufgetragen wird. Der mit eine "1" bezeichnete Bereich dieser Diagramme stellt die Flüssigphase im Bad dar. "2" bezeichnet das Erstarren der primären Zinkdendriten. In Fig. 4 beginnt die Schmelze im Bad bei ca. 367°C zu erstarren. In Fig. 5 beginnt das Erstarren auch bei ca. 367°C und in Fig. 6 bei ca. 372°C. "3" bezeichnet das Erstarren des binären Eutektikums und "4" bezeichnet den Bereich des Erstarrens des ternären Eutektikums, das gemäß Erfindung Bereiche/Zonen mit reinem Zink, Bereiche/Zonen mit $MgZn_2$ Legierungen und sehr kleine Bereiche/Zonen mit Al-Phase umfasst. Die wirklichen Werte können in der Praxis leicht von den theoretischen Werten der Abkühlkurven abweichen, aber eine qualitative Aussage ist möglich.

Fig. 4 zeigt ein standardmäßig errechnete Abkühlkurve aus dem bekannten Dreistoffsystem Zn-Al-Mg (mit 2.0 Gew.% Al und 2.0 Gew.% Mg), wobei, wie bis anhin üblich, die thermodynamisch bevorzugte $Mg_2Zn_{11}$-Phase nicht ausgeschlossen wurde. Für Fig. 5 hingegen wurde nicht die standardmäßig errechneten Abkühlkurve aus dem bekannten Dreistoffsystem Zn-Al-Mg herangezogen, sondern eine modifizierte Form dieser Kurve. Die Modifikation lag im rechnerischen Ausschluss der thermodynamisch bevorzugten $Mg_2Zn_{11}$-Phase, da diese Phase in erstarrten und industriell hergestellten Schichten nicht nachgewiesen werden konnte.

Anhand der Fig. 6 kann man erkennen, dass sich die theoretisch ermittelte Erstarrungskurve deutlich gegenüber bisherigen Ansätzen verändert hat. Die Erstarrungskurve nach Fig. 6 zeigt kein binäres Eutektikum BE oder nur noch einen vernachlässigbar geringen Anteil des binären Eutektikums BE.

Der Zusammenhang zwischen dem Magnesium-Anteil (in Gewichtsprozent) und dem Aluminium-Anteil (in Gewichtsprozent) kann alternativ auch anhand der folgenden Gleichung [4] beschrieben werden, wobei die Grenzwerte 0.5 und 1.3 aus der letzten Spalte der Tabelle 3 entnommen wurden:

$$0.5 \quad < \quad x-y \quad < \quad 1.3 \qquad\qquad [4]$$

Besonders vorzugsweise liegen diese Grenzwerte für alle Ausführungsformen bei 0.5 und 1.1.

Gleichung [4] definiert einen proportionalen Zusammenhang zwischen dem Magnesium-Anteil (in Gewichtsprozent) und dem Aluminium-Anteil (in Gewichtsprozent). Vorzugsweise besteht bei allen Ausführungsformen der Erfindung ein linearer proportionaler Zusammenhang, der in Fig. 7 grafisch dargestellt ist. Es sind in Fig. 7 drei entsprechende Geraden gezeigt, wobei x auf der horizontalen Achse und y auf der vertikalen Achse aufgetragen sind. x entspricht dem Aluminium-Anteil in Gewichtsprozent und y entspricht dem Magnesium-Anteil in Gewichtsprozent. In Fig. 7 ist ein Fenster F1 eingezeichnet, das einen besonders bevorzugten Bereich festlegt. Das Fenster F1 zeigt den Bereich an, in dem der Aluminium-Anteil im Bereich zwischen 1.8 und 3.0 Gewichtsprozent liegt und der Magnesium-Anteil (im Bereich zwischen 1.3 und 2.7 Gewichtsprozent liegt. Das Fenster F2 zeigt den erfindungsgemäßen Bereich an, in dem der Aluminium-Anteil im Bereich zwischen 2 und 2.9 Gewichtsprozent liegt und der Magnesium-Anteil im Bereich zwischen 1.5 und 2.4 Gewichtsprozent liegt.

Generell kann festgelegt werden, dass sich die Legierung dadurch auszeichnet, dass der Aluminium-Anteil (in Gewichtsprozent) und der Magnesium-Anteil (in Gewichtsprozent) im Bereich des Fenster F1 liegt, dass sich der Magnesium-Anteil (in Gewichtsprozent) proportional zu dem Aluminium-Anteil (in Gewichtsprozent) verhält und dass der Magnesium-Anteil (in Gewichtsprozent) stets deutlich kleiner ist als der Aluminium-Anteil (in Gewichtsprozent). Der Zusammenhang ist also asymmetrisch.

Anders als beim eingangs beispielhaft aufgelisteten Stand der Technik, werden der Aluminium-Anteil x und der Magnesium-Anteil y so gewählt, dass deutlich weniger Magnesium im Vergleich zum Aluminium im Schmelzbad vorhanden ist (diese Aussage gilt nicht für das Dokument GB 1,125,965). Die folgende Tabelle 4 (Beispiele 3.2, 4.2 und 4.3 sind gemäß Anspruch 1) wurde aus der Tabelle 1 abgeleitet, wobei in der letzten Spalte angegeben ist, wieviel Prozent Magnesium bezogen auf Aluminium in der Schmelze zum Einsatz kommt, d.h. vorgelegt wird. In der linken Spalte sind die Ergebnisse der Untersuchungen einer Versuchsreihe der Erfindung anhand eines vereinfachten Bewertungsschemas dargestellt. Besonders vorteilhafte Ergebnisse im Sinne der Aufgabenstellung sind durch ein (+++) gekennzeichnet. Nicht ganz so hervorragende aber trotzdem gute Ergebnisse sind durch ein (++) gekennzeichnet. Gute Ergebnisse sind durch ein (+) gekennzeichnet.

| Tabelle 4: | | | |
|---|---|---|---|
| Beispiel (Versuchsreihe) | Aluminium in Gew.% (x) | Magnesium in Gew.% (y) | y in Prozent von x (mit x = 100%) |
| 1.1 / (+) | 2 | 0.9 | 45 |
| 1.2 / (+) | 2 | 1.1 | 55 |
| 1.3 / (+) | 2 | 1.3 | 65 |
| 2.1 / (+) | 2.3 | 1.4 | 60.87 |
| 2.2/ (++) | 2.3 | 1.6 | 69.57 |
| 2.3/ (+++) | 2.3 | 1.8 | 78.26 |
| 3.1 / (+) | 2.5 | 1.4 | 56 |
| 3.2/ (+++) | 2.5 | 1.6 | 64 |
| 3.3/ (++) | 2.5 | 1.8 | 72 |
| 4.1/ (+) | 2.7 | 1.4 | 51.85 |
| 4.2/ (++) | 2.7 | 1.6 | 59.26 |
| 4.3/ (+++) | 2.7 | 1.8 | 66.67 |

Ganz besonders bevorzugte Ergebnisse liefert eine Zusammensetzung mit einem Aluminium-Anteil (in Gewichtsprozent) von 2.5 und einem Magnesium-Anteil (in Gewichtsprozent) von 1.6. Bei der Darstellung in Fig. 1C handelt es sich um eine schematische Darstellung. In Fig. 1C ist der entsprechende Punkt im Gehaltsdreieck mit P1 bezeichnet. Der gewünschte quasi einphasige Erstarrungsweg, der in Richtung des ternären eutektischen Punktes führt, ist in Fig. 1C vereinfachend durch einen nach links oben weisenden Pfeil F angedeutet. Es ist hier anzumerken, dass der Pfeil F gerade ist, da es sich um eine Projektion aus der drei-dimensionalen Darstellung (siehe hierzu Fig. 2A) in die Ebene des Gehaltsdreiecks handelt. Der eigentliche quasi einphasige Erstarrungsweg F* ist eine Kurve, die entlang einer gekrümmten Fläche zum eutektischen Punkt E verläuft, wie man Fig. 2A entnehmen kann. Dieser ternäre eutektische Punkt E (siehe auch Fig. 2A und 2B) liegt laut Literatur bei einer Zusammensetzung von 93.7 Gew.-% Zn, 2.4 Gew.-% Mg und 3.9 Gew.-% Al bei 343°C.

In Fig. 2A ist eine 3-dimensionale Darstellung der Anteile des ternären Systems Al-Mg-Zn im zwei-dimensionalen Bereich gezeigt. Nach oben in den Raum hinein ist die Temperatur T aufgetragen. Dieser Darstellung ist der Verlauf des Zustandspunktes gemäss Erfindung zu entnehmen. D.h., in Fig. 2A kann man den Verlauf des quasi einphasigen Erstarrungswegs F* im Dreidimensionalen erkennen. Der quasi einphasige Erstarrungsweg F* verläuft auf direktem Weg entlang der gekrümmten Fläche vom Punkt P1* zum eutektischen Punkt E. Fig. 2B zeigt eine 2-dimensionale Darstellung des zinkreichen Bereichs der Fig. 2A. Der quasi einphasige Erstarrungsweg F* der Fig. 2A wurde in die Ebene projiziert und ist nun mit F bezeichnet. Der Punkt P1* der Fig. 2A ist im Zweidimensionalen mit P1 bezeichnet.

Der quasi einphasige Erstarrungsweg F* läuft gemäß Theorie der Erfindung direkt entlang einer gekrümmten Fläche vom Punkt P1* zum ternären eutektischen Punkt E, wie man in Fig. 2A erkennen kann.

Durch das Vorgeben eines quasi einphasigen Erstarrungswegs F*, vermeidet man gemäß Erfindung diejenigen Phasenkoexistenzgebiete, in denen das binäre Eutektikum BE erstarrt. Das binäre Eutektikum BE besteht aus der $MgZn_2$-Phase und der Zink-Phase. Der quasi einphasige Erstarrungsweg F* der Erfindung verläuft bewusst so, dass beim Abkühlen der Schmelze beim Austauchen aus dem Bad 11 keine Liquidusschnittlinie (eine Liquidusschnittlinie wird auch eutektische Rinne genannt) erreicht wird. Der Zustandspunkt einer erfindungsgemäßen Schmelze verläuft nicht entlang einer eutektischen Rinne bis zum ternären eutektischen Punkt E, sondern er strebt gemäß Erfindung direkt den ternären eutektischen Punkt E an.

In Fig. 3 ist ein weiteres Gehaltsdreieck des Zn-Al-Mg Systems in stark schematisierter und nicht maßstäblicher Form gezeigt. Der anzustrebende ternäre eutektische Punkt E ist durch einen kleinen Kreis bezeichnet. Das gleichseitige Gehaltsdreieck ist in drei Dreiecksflächen Al-E-Zn-Al (D1), Al-E-Mg-Al (D2) und Mg-Zn-E-Mg (D3) unterteilt. Generell gilt beim Abkühlen des Zn-Al-Mg Systems, dass alle Legierungen im Bereich der Dreiecksfläche Al-E-Zn-Al (D1) die binäre eutektische Reaktion Zn-Al zeigen. Alle Legierungen im Bereich der Dreiecksfläche Al-E-Mg-Al (D2) zeigen die binäre eutektische Reaktion Mg-Al und alle Legierungen im Bereich der Dreiecksfläche Mg-Zn-E-Mg (D3) zeigen die binäre eutektische Reaktion Mg-Zn. Gemäß Erfindung wird der Erstarrungsweg F so gelegt, dass er in der Projektion ins Zweidimensionale von einem Punkt P1, wie bereits zuvor erwähnt, quasi entlang der Line Zn-E verläuft, um so die binäre eutektische Reaktion Mg-Zn und die binäre eutektische Reaktion Zn-Al zu vermeiden.

Idealerweise erfolgt das Erstarren gemäß neuem Legierungskonzept exakt entlang des quasi einphasigen Erstarrungswegs F*. In der Praxis ergeben sich jedoch Abweichung von den theoretischen Betrachtungen und es wird auch nicht immer gelingen die Badzusammensetzung so vorzugeben, in Echtzeit zu prüfen und nachzujustieren bzw. von Seiten der Anlage 200 her zu steuern (was zum Beispiel durch das Zuchargieren von Legierungs-Blöcken erfolgen kann), dass der ideale einphasige Erstarrungsweg F* der Theorie verfolgt werden kann. Im Zusammenhang mit der vorliegenden Erfindung ist daher nicht von einem uneingeschränkten oder "idealen" einphasigen Erstarrungsweg sondern von einem quasi einphasigen Erstarrungsweg F* die Rede. Dabei wird ein kleiner Korridor zugelassen, der sich entlang des idealen quasi einphasigen Erstarrungswegs orientiert und der direkt zu dem ternären eutektischen Punkt E führt.

Alle binären Mg-Zn-Phasen weisen eine gewisse ternäre Löslichkeit für Aluminium auf. Diese Löslichkeit liegt im Bereich einiger weniger Atom-Prozent (at.%). Der zuvor erwähnte Korridor kann daher kleine Aluminium-Anteile als zweite Phase zulassen, wobei der Aluminium Anteil stets kleiner ist als 5% bezogen auf den Feststoffgehalt. Besonders bevorzugt sind gemäß Erfindung Schutzüberzüge, bei denen der Aluminium Anteil stets kleiner ist als 2% bezogen auf den Feststoffgehalt. Aluminium als zweite Phase beim Erstarren ist insofern unkritisch, als die Al-Phase eine vergleichbare Erstarrungswärme freisetzt wie die Zinkphase. D.h. die Al-Phase "stört" nicht den Erstarrungsprozess bzw. die Al-Phase hat keinen nachteiligen Einfluss auf den Verlauf der Erstarrungskurve F, die gemäß Erfindung in etwa dem Verlauf der theoretischen Erstarrungskurve in Fig. 6 folgen soll.

Es wird somit gemäß Erfindung die Zusammensetzung des Bades so vorgelegt, dass beim Erstarren des Schutzüberzugs 10 auf dem Stahlflachprodukt 100 die Erstarrung im Wesentlichen zweiphasig erfolgt, wenn man hier das primäre Zink als eine Phase und das ternäre Eutektikum als zweite Phase betrachtet.

Zusammenfassend gesagt, kann dies durch die Vorgabe der folgenden Kriterien erreicht werden:

- der Aluminium-Anteil (in Gewichtsprozent) ist grösser als der Magnesium-Anteil (in Gewichtsprozent);
- der Aluminium-Anteil (in Gewichtsprozent) liegt im Bereich zwischen 2 und 2.9 Gewichtsprozent;
- der Magnesium-Anteil (in Gewichtsprozent) liegt im Bereich zwischen 1.5 und 2.4 Gewichtsprozent;
- das Verhältnis vom Magnesium-Anteil (in Gewichtsprozent) zur Summe des Aluminium-Anteils (in Gewichtsprozent) und des Magnesium-Anteils (in Gewichtsprozent) liegt im Bereich zwischen 0.34 und 0.4.

Gemäss Erfindung ergibt sich auf dem Stahlflachprodukt 100 eine Schutzschicht 10 (siehe Fig. 9), die die folgenden vier Phasenbestandteile umfasst (von sehr kleinen Verunreinigungen abgesehen):

- die primären Zinkdendriten (Z),
- das ternäre Eutektikum (TE) bestehend aus Zink, $MgZn_2$ und Aluminiumreicher Zinkphase, sowie
- kleine Anteile der Aluminium-reichen Zinkphase (A) allein, und

- sehr geringe Anteile des binären Eutektikums (BE) bestehend aus Zink und MgZn$_2$.
- der Anteil der Aluminium-reichen Zinkphase (A) und des binären Eutektikums (BE) ist bei allen Ausführungsformen in Summe kleiner als < 10% und vorzugsweise bei allen Ausführungsformen < 5% des gesamten Schichtvolumens. Bevorzugt ist der Anteil der Aluminium-reichen Zinkphase (A) größer als jener des binären Eutektikums (BE).

Fig. 8 zeigt eine stark schematische Darstellung eines Querschliffs durch einen oberen Bereich eines Stahlflachprodukts 100 und durch eine konventionelle ZnAlMg-Schutzschicht 101, wobei diese Schutzschicht 101 aus einem Al-Mg-Zn Bad mit 2.0 Gewichtsprozent Aluminium und 2.0 Gewichtsprozent Magnesium erzeugt wurde. Es handelt sich um ein REM-Bild eines Querschliffs, wobei das Bild zur besseren Darstellbarkeit nachbearbeitet wurde. REM steht für Raster-Elektronen-Mikroskop. Es sei angemerkt, dass der Übergang von der Schutzschicht 101 zum Substrat des Stahlflachprodukts 100 typischerweise keine scharfe Grenze darstellt. In Fig. 8 und in Fig. 9 ist dieser Übergang daher durch eine gestrichelte Linie angedeutet. Die Bereiche mit primären Zinkdendriten sind mit einem Z bezeichnet und haben eine Art Blasen- oder Körnerform. Die Bereiche des ternären Eutektikums sind mit TE bezeichnet. A steht für die Aluminium-reiche Zinkphase. BE kennzeichnet Bereiche mit binärem Eutektikum (bestehend aus Zink und MgZn$_2$).

Fig. 9 zeigt eine stark schematische Darstellung eines Querschliffs durch einen oberen Bereich eines Stahlflachprodukts 100 mit einer erfindungsgemäßen ZnAlMg-Schutzschicht 10, wobei diese spezielle Schutzschicht 10 aus einem Al-Mg-Zn Bad mit 2.5 Gewichtsprozent Aluminium und 1.6 Gewichtsprozent Magnesium erzeugt wurde. Dieser Querschliff zeigt fast ausschließlich primäre Zinkdendriten Z umgeben von ternärem Eutektikum TE mit nur sehr wenigen A-Bereichen und nur mit geringen Spuren von BE. Auch beim Umsetzen des neuen Legierungskonzeptes kann es vorkommen, dass es Reste von A-Bereichen gibt. Diese A-Bereiche sind in gewissen Grenzen tolerierbar und nicht unbedingt von Nachteil. Es können auch sehr geringe Spuren von BE auftreten, wobei deren Anteil in einer erfindungsgemäßen ZnAlMg-Schutzschicht 10 vernachlässigbar gering ist, wie bereits beschrieben.

Fig. 9 belegt eindeutig, dass das Verfolgen eines quasi einphasigen Erstarrungswegs zu einer ZnAlMg-Schutzschicht 10 führt, in der zum grossen Teil nur als erste Phase die primären Zinkdendriten Z und als zweite Phase das ternäre Eutektikum TE vorhanden sind.

Außerdem findet man bei schmelztauchverzinkten Stahlbandprodukten und anderen schmelztauchverzinkten Stahlflachprodukten eine intermetallische Zwischenschicht zwischen dem Stahlsubstrat des Stahlflachprodukts 100 und dem Schichtüberzug 10. Diese Zwischenschicht ist allerdings deutlich dünner als der Schichtüberzug 10 der Erfindung und ist daher nicht in den Figuren gezeigt.

Es ist ein klarer Vorteil der Erfindung, dass Schichtüberzüge 10 mit hervorragenden Eigenschaften bereits bei Badtemperaturen von weniger als 460 Grad Celsius hergestellt werden können. Somit können auch Stahlflachprodukte 100 beschichtet werden, bei denen bei höheren Badtemperaturen typische Oberflächendefekte auftreten würden.

Eine Anlage 200 (siehe z.B. Fig. 10), die gemäss Erfindung betrieben wird, weist vorzugsweise einer Bandeintrittstemperatur des Stahlflachprodukts 100 auf, die zwischen 400 und 490 Grad Celsius liegt. Besonders bevorzugt ist eine Bandeintrittstemperatur zwischen 420 und 480 Grad Celsius.

Das Stahlflachprodukt 100 wird gemäss Erfindung vorzugsweise durch ein Zink-Legierungsschmelzbad 11 mit erfindungsgemässer Legierungszusammensetzung geführt, das eine Badtemperatur von 400 - 480 Grad Celsius aufweist. Besonders bevorzugt ist eine Badtemperatur zwischen 420 und 475 Grad Celsius.

Durch ein Zuchargieren von Legierungsblöcken kann die Zusammensetzung des Zink-Legierungsschmelzbads 11 jeweils bei Bedarf nachjustiert werden, um die Vorgaben in Sachen Legierungszusammensetzung der Erfindung einhalten zu können.

Erfindungsgemäß können Stahlflachprodukte 100 hergestellt werden, die einen Schutzüberzug 10 mit der folgenden Zusammensetzung hat:

- einen Aluminium-Anteil, der im Bereich zwischen 2.0 Gew.% und 29 Gew.% liegt; und
- einen Magnesium-Anteil, der im Bereich zwischen 1.5 Gew.% und 2.4 Gew.% liegt,

wobei der Aluminium-Anteil in Gewichtsprozent grösser ist als der Magnesium-Anteil in Gewichtsprozent.

Vorzugsweise werden dem Legierungsschmelzbad 11 ein weiteres oder mehrere weitere Legierungselemente aus der Gruppe Silizium, Lithium, Titan, Bor, Beryllium, Yttrium, Zirkon, Phosphor zugesetzt, wobei der Anteil dieser weiteren Legierungselemente jeweils pro Element kleiner ist als 0.1 Gewichtsprozent. Mit diesen weiteren Legierungselementen können die Eigenschaften der Schutzschicht 10 bei Bedarf modifiziert werden.

Die Erfindung ermöglicht eine stabilere Fahrweise einer Anlage 200, wie z.B. in Fig. 10 gezeigt. Es können reproduzierbar bessere Oberflächenqualitäten erzielt werden, da die Legierungszusammensetzung vor dem Erstarren mehr Freiheitsgrade (im Sinne eines grösseren Produktionsfensters) zulässt während der quasi-einphasige Erstarrungsweg eingehalten wird.

Wichtig ist, dass das vorliegende Legierungskonzept beim Austauchen des Stahlbandes 100 aus dem Schmelzbad 11 und beim Abstreifen mittels Düsen 14 (siehe Fig. 10) mehr Freiheitsgrade (im Sinne eines größeren Produktionsfensters) für das Optimieren des Abstreifprozesses ermöglicht. Die Erfindung ermöglicht es den Düsenlippenspalt d der Düsen 14 und/oder den Abstand z der Düsen 14 zum Stahlband 100 beim Austauchen und Abstreifen in weiten Bereichen einstellen und optimieren, um so das gewünschte Gesamtergebnis zu erzielen.

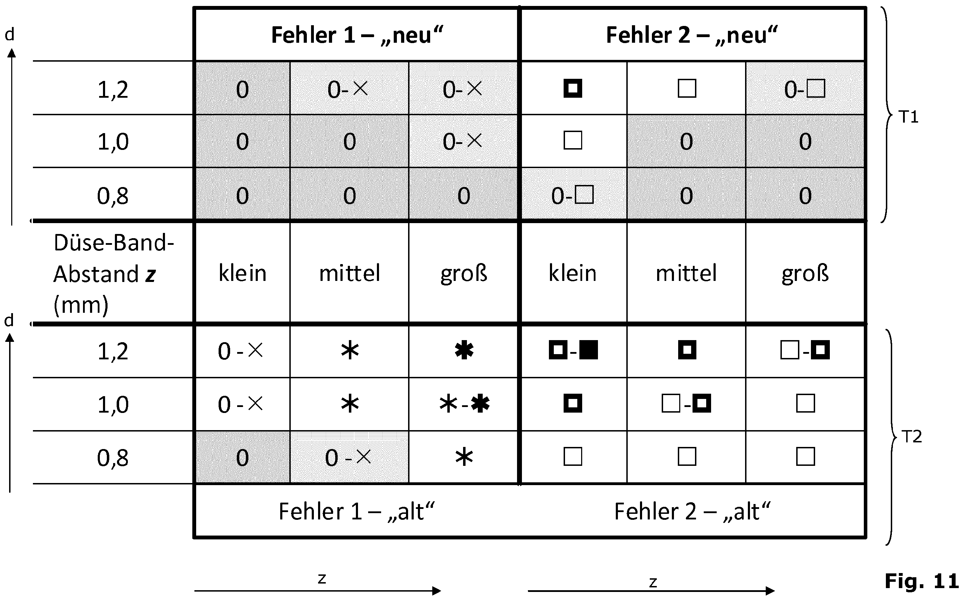

Gemäß Erfindung konnten beim Abstreifen nach dem Austauchen das Auftreten von Fehlerbildern (wie ZnAlMg-Abstreifstörung und Oberflächentopographiefehler) deutlich reduziert werden, wie anhand der tabellarischen Darstellung in Fig. 11 gezeigt wird. Fig. 11 zeigt eine Tabelle mit einem oberen Bereich T1 und einem unteren Bereich T2. Im oberen Bereich T1 ist die Fehlerhäufigkeit bei erfindungsgemäßen Schichtüberzügen 10 [für die konkrete Zusammensetzung Al=2,6 Gew% und 1,6 Gew% Mg] auf einem Stahlband 100 gezeigt, wobei zwischen zwei unterschiedlichen Fehlertypen unterschieden wird, die hier als Fehler 1 und als Fehler 2 bezeichnet werden. Im unteren Bereich T2 hingegen ist die Fehlerhäufigkeit bei konventionellen Zn-Mg-Al Schichtüberzügen auf einem Stahlband 100 gezeigt. Auch hier wurden wieder zwei unterschiedliche Fehlertypen dargestellt.

Auf der z-Achse wurden jeweils ein kleiner, mittlerer und großer Düsen-Bandabstand z (in Millimeter) aufgetragen. Ein kleiner Düsen-Bandabstand z liegt im Bereich von 3-5 mm, ein mittlerer Düsen-Bandabstand z im Bereich von 6-8 mm und ein großer Düsen-Bandabstand z im Bereich von 9-14 mm.

Auf der d-Achse ist der Düsenlippenspalt d in Millimeter (plus/minus 0,05 mm) aufgetragen, wobei hier drei diskrete Werte wie folgt vorgegeben sind: d = 0,8 mm, d = 1,0 mm und d = 1,2 mm.

In den einzelnen Feldern der Tabelle sind die Intensitäten der Fehler 1 und 2 in Abhängigkeit der Abstreifparameter z und d in Form von Symbolen dargestellt. Die folgende Legende erläutert die Bedeutung der verschiedenen Symbole:

keine Fehler... 0

leicht... $\times$ oder $\square$

mittel ... * oder ▉

stark... ✳ oder ▪

Um die Lesbarkeit der Tabelle zu verbessern, wurden diejenigen Felder, die keinen Fehler zeigen oder bei denen die Fehlerintensität nur leicht ist in dunkelgrau oder hellgrau hinterlegt. Weiß hinterlegte Felder in der Tabelle hingegen stehen für eine Fehlerintensität, die im Bereich von leicht bis mittel, mittel, mittel bis stark oder stark liegt.

Man kann erkennen, dass bei konventionellen Zn-Mg-Al Schichtüberzügen (im unteren Bereich T2) nur zwei Felder keine Fehler 1 oder keine bis leichte Fehler 1 aufweisen (die beiden Felder ganz unten links in der Tabelle, die dunkelgrau und hellgrau hinterlegt sind). Alle anderen Felder zeigen deutlich mehr Fehler 1 und Fehler 2. Demgegenüber ist die Fehlerhäufigkeit bei erfindungsgemäßen Schichtüberzügen 10 in Bezug auf den Fehler 1 deutlich besser. Alle Felder oben links in der Tabelle im Bereich T1 sind daher dunkelgrau oder hellgrau hinterlegt. Was den Fehler 2 anbelangt, so sind nur drei Felder im Bereich T1 weiß hinterlegt. Dies sind die folgenden Felder: d = 1,0 mm und z = klein; d = 1,2 mm und z = klein; d = 1,1 mm und z = mittel.

Wenn man nun die sogenannte Schnittmenge der Fehler 1 und 2 betrachtet, so zeigt sich, dass bei erfindungsgemäßen Schichtüberzügen 10 (Bereich T1) kaum Fehler bei folgenden Parametern auftreten: d = 0,8 mm und z = klein; d = 0,8 mm und z = mittel; d = 0,8 mm und z = gross; d = 1,0 mm und z = mittel; d = 1,0 mm und z = gross. Bei konventionellen Schichtüberzügen (Bereich T2) hingegen treten kaum Fehler nur bei den folgenden Parametern auf: d = 0,8 mm und z = klein. Alle anderen Felder im Bereich T2 sind daher für die Produktion quasi tabu.

Es konnte so gezeigt werden, dass das Einstellen der physikalischen Parameter (Düsenlippenspalt d und/oder den Abstand z der Düsen zum Stahlband) beim Austauchen und Abstreifen in größeren Parameterfenstern möglich ist als bisher, ohne dass solche Einstellungen zu einer Erhöhung der Fehlerbilder am Stahlband führen würde.

Ausserdem sind - je nach Umsetzung des erfindungsgemässen Legierungskonzepts - die Herstellungskosten und der Energieaufwand für die Schutzschicht 10 niedriger als bei vergleichbaren Verfahren.

Gemäß Erfindung wurden die Legierungsbestandteile (vor allem der Aluminium-Anteil und der Magnesium-Anteil) so gewählt, dass ein möglichst niedriger Energieverbrauch (bzw. eine optimale Energiebilanz) erreicht wird. Dabei spielt einerseits der direkte Energieverbrauch beim Schmelzen, Beschichten und Abstreifen eine Rolle. Andererseits schlägt aber vor allem auch der Energieaufwand der Einsatzstoffe deutlich zu Buche. Im Folgenden werden hierzu weitere erläuternde Details gegeben.

Bei einer Optimierung des Energieaufwands spielt unter anderem die Dichte des Schutzüberzugs 10 eine Rolle. Aufgrund von rund 5,924 at % Aluminium und ca. 4,047 at % Magnesium, weist die erfindungsgemässe Legierung im Vergleich zu reinem Zink oder Zink-Eisen eine um rund 7 % geringere Dichte auf. Das bedeutet, dass bei der erfindungsgemässen Legierung - unabhängig vom u.a. chemisch bedingten besseren Korrosionsschutz - eine Verringerung des Schichtauflagegewichtes (Gewicht des Schutzüberzugs 10) um 7 % immer noch die gleiche Schichtdicke ergibt wie bei Zink oder Zink-Eisen Schichten. Rein mechanisch betrachtet ist trotz der Verringerung des Schichtauflagegewichtes um 7 % aufgrund der gleichen Schichtdicke immer noch in etwa der gleiche Schutz für das Stahlband 100 gegeben.

Meist wird dieser Aspekt, der einer physikalischen oder mechanischen Natur ist, aufgrund des korrosionstechnisch begründbaren Schichtauflagen-Einsparungspotentials außer Acht gelassen. Theoretisch wäre daher eine deutliche Erhöhung des Anteils an leichten Legierungselementen im Hinblick auf die Verringerung des spezifischen Gewichtes der Schichtauflage durchaus positiv, dagegen sprechen aber ökonomische und ökologische Überlegungen, wie im Folgenden dargestellt.

Hier sind die Normalpotentiale der Legierungselemente angegeben:

Zn: - 0,7926 V;

Al: - 1,676 V;

Mg: - 2,372 V

Die Normalpotentiale deuten bereits an, dass unterschiedlich hohe Energieaufwände für die Herstellung der jeweiligen Reinmetalle erforderlich sind.

Folgende Energien werden für die Herstellung von jeweils 1 kg Reinmetall benötigt (die angegebenen Werte stammen aus "Leichtbau: Prinzip, Werkstoffauswahl und Fertigungsvarianten", herausgegeben von Hans Peter Degischer / TU Wien / Institut für Werkstoffwissenschaft und Werkstofftechnologie / und Sigrid Lüftl / TU Wien / Institut für Werkstoffwissenschaft und Werkstofftechnologie / Nichtmetallische Werkstoffe /, Verlag WILEY-VCH):

| Primär-Reinzink: | ca. | 90 MJ |
| Sekundär-Reinzink: | ca. | 17 MJ |
| Primär-Reinaluminium: | ca. | 210MJ |
| Recycling-Reinaluminium: | ca. | 18 MJ |
| Primär-Reinmagnesium: | ca. | 130 MJ |
| Recycling-Reinmagnesium: | ca. | 18 MJ |

Ohne Berücksichtigung der Schmelzwärme (Zn: ca. 112 kJ/Kg; Mg: ca. 358 kJ/kg; Al: ca. 397 kJ/kg), welche mit steigenden Legierungsanteilen an Al und Mg zu weiteren, überwiegend kühlungsbedingten, Energieverlusten führen, lässt sich daher ableiten, dass sich der Energieaufwand für die Herstellung von ZnMgAl-Legierungen mit steigenden Legierungsgehalten deutlich erhöht. Diese Aussage ist auf die Masse bezogen. Im Fall einer erfindungsgemässen Legierung mit 2,5 % Aluminium und 1,6 % Magnesium ergibt sich im Vergleich zu Reinzink ein um ca. 7 % erhöhter Energieaufwand für die Produktion der jeweiligen Reinmetalle.

Allerdings verringert sich - wie bereits erwähnt - bei gleichbleibender Schichtdicke der Auflage 10 das Gewicht bzw. die Masse der Schichtauflage 10 mit steigenden Legierungsgehalten aufgrund der spezifisch leichteren Legierungselemente, was vordergründig die Energiebilanz weitgehend egalisiert.

Die Recycling-Quoten für Zink, Aluminium und Magnesium und etwaige Verluste im Verfahren wurden für die Ermittlung des durchschnittlichen Energiebedarfs hier nicht berücksichtigt.

**Patentansprüche**

1. Verfahren zum Aufbringen eines Schutzüberzugs (10) auf ein Stahlflachprodukt (100), bei dem der Schutzüberzug (10) erzeugt wird, indem das Stahlflachprodukt (100) mit einer Bandeintrittstemperatur im Bereich zwischen 400 und 490 Grad Celsius durch ein Zink-Legierungsschmelzbad (11) einer Anlage (200) geführt wird, wobei das Zink-Legierungsschmelzbad (11) eine Badtemperatur im Bereich von 400 bis 480 Grad Celsius aufweist und einen Aluminium-Anteil sowie einen Magnesium-Anteil umfasst, wobei das Zink-Legierungsschmelzbad (11) folgende Zusammensetzung aufweist:

- der Aluminium-Anteil liegt im Bereich zwischen 2.0 und 2.9 Gewichtsprozent;
- der Magnesium-Anteil liegt im Bereich zwischen 1.5 und 2.4 Gewichtsprozent;
- der Aluminium-Anteil in Gewichtsprozent ist grösser als der Magnesium-Anteil in Gewichtsprozent;
- das Verhältnis des Magnesium-Anteils in Gewichtsprozent zur Summe des Aluminium-Anteils in Gewichtsprozent und des Magnesium-Anteils in Gewichtsprozent liegt im Bereich zwischen 0.34 bis 0.40; und
- der Rest des Zink-Legierungsschmelzbads (11) sind Zink und unvermeidbare Verunreinigungen,

wobei ein Erstarrungsprozess an dem Stahlflachprodukt (100) in der Anlage (200) steuerungstechnisch unter Einsatz von Düsen (14) gesteuert wird, wobei sich im Zink-Legierungsschmelzbad (11) ein Feststoffanteil vor dem Erstarren des ternären Eutektikums (E) ergibt, der im Bereich zwischen 0.4 und 0.6 Mol-Anteil des Feststoffs im Zink-Legierungsschmelzbad (11) liegt,
und wobei eine Kühlrate für den Erstarrungsprozess der Zusammensetzung des Zink-Legierungsschmelzbads (11) an dem Stahlflachprodukt (100) eingestellt wird, mit welcher eine $Mg_2Zn_{11}$-Phase ausgeschlossen wird.

**2.** Verfahren nach Anspruch 1, **dadurch gekennzeichnet, dass** in einem Verfahrensschritt die Zusammensetzung des Zink-Legierungsschmelzbads (11) gesteuert wird, wobei sich durch das Einhalten der Zusammensetzung des Zink-Legierungsschmelzbads beim Erstarren an dem Stahlflachprodukt (100) primäre Zinkdendriten (Z) und ternäres Eutektikum (TE) bilden.

**3.** Verfahren nach Anspruch 2, **dadurch gekennzeichnet, dass** sich beim Erstarren an dem Stahlflachprodukt (100) ein kleiner Rest an Aluminium-reichen Zinkphasen (A) und des binären Eutektikums (BE) bildet, welche in Summe kleiner als < 10% und vorzugsweise < 5% des gesamten Schichtvolumens aufweisen.

**4.** Verfahren nach einem der Ansprüche 1 oder 2, **dadurch gekennzeichnet, dass** der Erstarrungsprozess an dem Stahlflachprodukt (100) in einer Anlage (200) steuerungstechnisch gesteuert wird, wobei sich im Zink-Legierungsschmelzbad (11) ein Feststoffanteil vor einer finalen eutektischen Erstarrung ergibt, der unter 55 % liegt.

**5.** Verfahren nach Anspruch 1, **dadurch gekennzeichnet, dass** in einem Verfahrensschritt die Zusammensetzung des Zink-Legierungsschmelzbads (11) durch ein Zuchargieren von Legierungsblöcken jeweils bei Bedarf nachjustiert wird.

**6.** Verfahren nach einem der Ansprüche 1 oder 2, **dadurch gekennzeichnet, dass** ein weiteres oder mehrere weitere Legierungselemente aus der Gruppe Silizium, Lithium, Titan, Bor, Beryllium, Yttrium, Zirkon, Phosphor dem Legierungsschmelzbad (11) zugesetzt werden, wobei deren Anteil jeweils pro Element weniger als 0.1 Gewichtsprozent beträgt.

**Claims**

**1.** A method for applying a protective coating (10) on a flat steel product (100), wherein the protective coating (10) is produced by guiding the flat steel product (100) having a strip entry temperature in the range between 400 and 490 degrees Celsius through a molten zinc alloy bath (11), wherein the molten zinc alloy bath (11) has a bath temperature in the range from 400 to 480 degrees Celsius and has an aluminum content and a magnesium content, wherein the molten zinc alloy bath (11) has the following composition:

- the aluminum content lies in the range between 2.0 and 2.9 weight percent;
- the magnesium content lies in the range between 1.5 and 2.4 weight percent;
- the aluminum content in weight percent is greater than the magnesium content in weight percent;
- the ratio of the magnesium content in weight percent to the sum of the aluminum content in weight percent and the magnesium content in weight percent lies in the range between 0.34 to 0.40; and
- the remainder of the molten zinc alloy bath (11) are zinc and unavoidable impurities,

wherein a solidification process on the flat steel product (100) is controlled in an apparatus (200) applying control technology using nozzles (14), wherein in the molten zinc alloy bath (11) before the solidification of the ternary eutectic (E) a solid content results, which lies in the range between 0.4 and 0.6 molar fraction of the solid content of the molten zinc alloy bath (11),
and wherein a cooling rate is adjusted for solidifying the composition of the molten zinc alloy in a solidification process on the flat steel product (100) with which a $Mg_2Zn_{11}$-phase is excluded.

**2.** The method according to claim 1, **characterized in that** in a process step the composition of the molten zinc alloy bath (11) is controlled, whereby due to maintaining the composition of the molten zinc alloy bath primary zinc dendrites (Z) and ternary eutectic (TE) are formed on the flat steel product (100) during solidification.

**3.** The method according to claim 2, **characterized in that** during solidification on the flat steel product (100) a small residue of aluminum-rich zinc phases (A) and of the binary eutectic (BE) is formed, which in sum comprise less than < 10% and preferably < 5% of the total volume of the coating.

**4.** The method according to one of the claims 1 or 2, **characterized in that** the solidification process on the flat steel product (100) is controlled in an apparatus (200) applying control technology, wherein in the molten zinc alloy bath (11), before a final eutectic solidification, a solid content results, which lies below 55%.

**5.** The method according to claim 1, **characterized in that** in a process step the composition of the molten zinc alloy bath (11) is readjusted by adding blocks of alloy if required.

**6.** The method according to one of the claims 1 or 2, **characterized in that** one or more further alloying elements from the group silicon, lithium, titanium, boron, beryllium, yttrium, zirconium, phosphor are added to the molten zinc alloy bath (11), wherein the content of each element is less than 0.1 percent per weight.


**Revendications**

**1.** Procédé pour appliquer un revêtement protecteur (10) sur un produit plat en acier (100), dans lequel le revêtement protecteur (10) est réalisé en faisant passer le produit plat en acier (100) dans un bain d'alliage de zinc en fusion (11) d'une installation (200) à une température d'entrée de bande entre 400 et 490 degrés Celsius, le bain d'alliage de zinc en fusion (11) présentant une température de bain dans la plage allant de 400 à 480 degrés Celsius et comprenant une fraction d'aluminium ainsi qu'une fraction de magnésium, le bain d'alliage de zinc en fusion (11) présentant la composition suivante :

- la fraction d'aluminium se situe dans la plage allant de 2,0 à 2,9 pour cent en poids ;
- la fraction de magnésium se situe dans la plage allant de 1,5 à 2,4 pour cent en poids ;
- la fraction d'aluminium en pourcentage en poids est supérieure à la fraction de magnésium en pourcentage en poids ;
- le rapport de la fraction de magnésium en pourcentage en poids sur la somme de la fraction d'aluminium en pourcentage en poids et de la fraction de magnésium en pourcentage en poids se situe dans la plage allant de 0,34 à 0,40 ; et
- le reste du bain d'alliage de zinc en fusion (11) est composé de zinc et d'impuretés inévitables,

dans lequel un processus de solidification au niveau du produit plat en acier (100) est commandé dans l'installation (200) par technique de commande en utilisant des buses (14), dans lequel il en résulte dans le bain d'alliage de zinc en fusion (11) une fraction solide avant la solidification de l'eutectique ternaire (E) qui se situe dans la plage entre 0,4 et 0,6 parties en moles de la matière solide dans le bain d'alliage de zinc en fusion (11), et dans lequel une vitesse de refroidissement est réglée pour le processus de solidification de la composition du bain d'alliage de zinc en fusion (11) sur le produit plat en acier (100), laquelle excluant une phase $Mg_2Zn_{11}$.

**2.** Procédé selon la revendication 1, **caractérisé en ce que** dans une étape du procédé on commande la composition du bain d'alliage de zinc en fusion (11), dans lequel en maintenant la composition du bain d'alliage de zinc en fusion lors de la solidification au niveau du produit plat en acier (100) il se forme des dendrites de zinc (Z) et de l'eutectique ternaire (TE).

**3.** Procédé selon la revendication 2, **caractérisé en ce qu'**il se forme lors de la solidification au niveau du produit plat en acier (100) un petit reste des phases de zinc riches en aluminium (A) et de l'eutectique binaire (BE), lesquels représentent au total moins de < 10 % et de préférence < 5 % du volume de couche total.

**4.** Procédé selon l'une des revendications 1 ou 2, **caractérisé en ce que** le processus de solidification sur le produit plat en acier (100) est commandé par technique de commande dans une installation (200), dans lequel il résulte dans le bain d'alliage de zinc en fusion (11) une fraction solide avant une solidification eutectique finale inférieure à 55 %.

**5.** Procédé selon la revendication 1, **caractérisé en ce que** dans une étape du procédé la composition du bain d'alliage de zinc en fusion (11) est réajustée selon les besoins en chargeant des blocs d'alliage.

**6.** Procédé selon l'une des revendications 1 ou 2, **caractérisé en ce que** l'on rajoute au bain d'alliage en fusion (11) un ou plusieurs autres éléments d'alliage à partir du groupe comprenant le silicium, lithium, titane, bore, béryllium, yttrium, zirconium, phosphore, leur fraction par élément étant inférieure à 0,1 pour cent en poids.

Al

$x_{Zn}$   P   $x_{Mg}$

$x_{Al}$

Mg                                    Zn

**Fig. 1A**

Al

$x_{Mg} = 10$

$x_{Zn} = 50$

$x_{Zn} = 90$

$x_{Al} = 10$

Mg                                    Zn

**Fig. 1B**

$x_{Zn} = 90$

$x_{Al} = 10$

$x_{Mg} = 2$

$x_{Zn} = 95$

F

P1

$x_{Al} = 3$

$x_{Al} = 2$

$x_{Mg} = 10$

$x_{Zn} = 99$

$x_{Al} = 1$

Zn

Al

$x_{Mg} = 1$

Mg

Fig. 1C

EP 2 893 051 B1

Fig. 2A

Fig. 2B

Fig. 3

**Fig. 4**

**Fig. 5**

**2.5 Gew.% Al**
**1.6 Gew.% Mg**

**Fig. 6**

**Fig. 7**

2.0 Gew.% Al
2.0 Gew.% Mg

**Fig. 8**

2.5 Gew.% Al
1.6 Gew.% Mg

**Fig. 9**

**Fig. 10**

EP 2 893 051 B1

| d | Fehler 1 – „neu" | | | Fehler 2 – „neu" | | | |
|---|---|---|---|---|---|---|---|
| 1,2 | 0 | 0-× | 0-× | ◘ | □ | 0-□ | T1 |
| 1,0 | 0 | 0 | 0-× | □ | 0 | 0 | |
| 0,8 | 0 | 0 | 0 | 0-□ | 0 | 0 | |
| Düse-Band-Abstand *z* (mm) | klein | mittel | groß | klein | mittel | groß | |
| 1,2 | 0 - × | ✳ | ✳ | ◘-■ | ◘ | □-◘ | T2 |
| 1,0 | 0 - × | ✳ | ✳-✳ | ◘ | □-◘ | □ | |
| 0,8 | 0 | 0 - × | ✳ | □ | □ | □ | |
| | Fehler 1 – „alt" | | | Fehler 2 – „alt" | | | |

z →     z →

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1125965 A
- WO 2006002843 A
- EP 1621645 A1
- WO 2012091385 A2
- EP 1857566 A1
- EP 2119804 A1
- EP 1466994 A1
- JP 2002285311 A

**In der Beschreibung aufgeführte Nicht-Patentliteratur**

- **K. HONDA et al.** Solidification Structure of the Coating Layer on Hot-Dip Zn-11 % AI-3% Mg-0.2% Si-Coated Steel Sheet. *Materials Transaction,* 2008, vol. 49 (6), 1395-1400
- Zn-Al-Mg alloy coatings: thermodynamic analysis and microstructure related properties. Dissertation. Universität Gent, 2006
- Leichtbau: Prinzip, Werkstoffauswahl und Fertigungsvarianten. Verlag WILEY-VCH